# FASCICULE DE BREVET EUROPEEN

(11) **EP 4 267 365 B1**
(45) Date de publication et mention de la délivrance du brevet: **04.12.2024**
(21) Numéro de dépôt: 21810662.3
(22) Date de dépôt: 22.10.2021
(51) Int. Cl.: B29C 48/265, B29C 48/49, B29C 48/25, B29C 48/025, B29C 48/21, B29C 48/07

(54) **INSTALLATION D'EXTRUSION AVEC TRANSFERT DU MODULE D'OUTILLAGE PAR LE SOUS-SOL**
EXTRUSIONSANLAGE MIT UNTERIRDISCHER ÜBERGABE DES WERKZEUGMODULS
EXTRUSION FACILITY WITH UNDERGROUND TRANSFER OF THE TOOL MODULE

(30) Priorité: 23.12.2020 FR 2014011
(43) Date de publication de la demande: 01.11.2023
(73) Titulaire: COMPAGNIE GENERALE DES ETABLISSEMENTS MICHELIN, 63000 Clermont-Ferrand (FR)
(72) Inventeur: DEL-HOYO, Fabien, 63040 Clermont-Ferrand Cedex 9 (FR); BABIN, Thomas, 63040 Clermont-Ferrand Cedex 9 (FR); TIROT, Hervé, 63040 Clermont-Ferrand Cedex 9 (FR); LE-BIHAN, Pablo, 63040 Clermont-Ferrand Cedex 9 (FR)
(74) Mandataire: M.F.P. Michelin
(86) Numéro de dépôt international: PCT/FR2021/051855
(87) Numéro de publication internationale: WO 2022/136746

(56) Documents cités:
- WO-A1-2018/115796
- WO-A1-2020/058625
- JP-A- 2005 254 464
- US-B1- 6 695 606

## Description

La présente invention concerne le domaine des installations d'extrusion, et en particulier des installations d'extrusion destinées à produire des profilés à partir d'un ou plusieurs mélanges de caoutchouc.

De tels profilés peuvent notamment être destinés à la fabrication de bandages pneumatiques.

De façon connue en soi et telle que divulguée dans WO 2018/115796 A1 ou dans JP 2005 254464 A, les installations d'extrusion peuvent comprendre plusieurs extrudeuses, qui sont raccordées à un outillage qui permet de réunir et d'agencer les différents mélanges en provenance desdites extrudeuses et qui comporte une filière permettant de conformer le profilé. On peut ainsi avantageusement obtenir, par coextrusion de plusieurs mélanges, des profilés relativement complexes.

Cependant, la multiplicité des extrudeuses au sein d'une même installation, ainsi que le caractère massif de l'outillage, qui doit en effet présenter une robustesse suffisante vis-à-vis des importantes contraintes de pression générées lors de l'extrusion des mélanges de caoutchouc, conduisent à réaliser des installations qui sont relativement encombrantes et, surtout, dont certaines parties sont très distantes les unes des autres, et/ou parfois difficilement accessibles.

Ceci complique la gestion de l'installation, notamment lorsqu'il est nécessaire de réapprovisionner les extrudeuses pendant l'opération d'extrusion, afin d'assurer la continuité de l'alimentation en mélange de caoutchouc, ou bien lorsqu'il est nécessaire de procéder à un nettoyage de l'outillage et/ou des extrudeuses après l'opération d'extrusion en vue de démarrer une nouvelle production.

Ainsi, il n'est pas rare, notamment, de devoir mobiliser plusieurs opérateurs pour conduire et/ou nettoyer une même installation d'extrusion, chaque opérateur étant affecté à un poste distinct au sein de l'installation d'extrusion.

En outre, les opérations nécessaires à une reconfiguration de l'installation, et plus particulièrement à un changement d'outillage, en vue du passage de la production d'un premier type de profilé à la production d'un second type de profilé différent du premier, sont souvent complexes et délicates, et donc relativement longues à réaliser, et ce d'autant plus que les masses mises enjeu lors des déplacements des extrudeuses et/ou de l'outillage sont particulièrement élevées, ce qui requiert une grande vigilance de la part des opérateurs pour garantir que lesdits déplacements se déroulent en toute sécurité.

De ce fait, les installations d'extrusion connues sont souvent peu flexibles, en ceci qu'elles sont peu adaptées à des changements rapides de production, alors même que l'on constate une demande croissante pour une diversification des productions, visant à produire en petites séries des profilés qui présentent chacun des caractéristiques très spécifiques et variées, en vue notamment de fabriquer en petites séries des pneumatiques spécifiques correspondants, ce qui requiert des changements de production de plus en plus fréquents.

Les objets assignés à l'invention visent par conséquent à remédier aux inconvénients susmentionnés et proposer une installation d'extrusion qui présente une bonne compacité, une grande commodité d'utilisation, et une excellente capacité à être reconfigurée rapidement et en toute sécurité lors des changements de production.

Les objets assignés à l'invention sont atteints au moyen d'une installation d'extrusion destinée à réaliser un profilé, ladite installation comprenant au moins un premier module de tête qui porte au moins une première extrudeuse destinée à délivrer un matériau constitutif du profilé, ladite installation comprenant également un emplacement, dit « emplacement coeur », qui est conçu pour recevoir un module d'outillage afin de permettre la connexion de ladite au moins une première extrudeuse audit module d'outillage en vue de conformer le profilé, ladite installation étant caractérisée en ce que l'emplacement coeur est situé à un premier niveau, dit « niveau de travail », qui est pourvu d'un plancher sur lequel un opérateur peut circuler pour accéder audit emplacement coeur qui se trouve au-dessus dudit plancher, et en ce que ladite installation comprend un dispositif de transfert par voie souterraine qui permet d' acheminer le module d'outillage jusqu' à l'emplacement coeur et/ou, respectivement, de dégager le module d'outillage hors dudit emplacement coeur, ledit dispositif de transfert comprenant à cet effet au moins une première cage d'ascenseur qui est conçue pour faire passer ledit module d'outillage à travers le plancher, depuis, ou respectivement vers, un second niveau, dit « sous-sol », qui est situé sous le plancher du niveau de travail.

Avantageusement, en prévoyant une évacuation, et plus globalement un acheminement, du module d'outillage par le sous-sol, l'installation selon l'invention permet de dégager, et de conserver, un maximum d'espace libre sur le plancher du niveau de travail pour les autres composants de l'installation, notamment pour les extrudeuses, qui peuvent ainsi être implantés audit niveau de travail, sur un même niveau de plancher, et de surcroît répartis sur ledit plancher dans plusieurs directions par rapport à l'emplacement coeur, de sorte que lesdits composants de l'installation d'une part occupent une surface au sol globale qui est relativement modeste, si bien que l'installation est relativement compacte, et d'autre part restent facilement accessibles à un même opérateur qui évolue sur le plancher.

De même, comme on le verra en détail par la suite, la mise en oeuvre d'un dispositif de transfert par voie souterraine selon l'invention permet de relier l'emplacement coeur à un emplacement de préparation distant, destiné au nettoyage et à la préparation des modules d'outillage, qui est avantageusement déporté par rapport à l'emplacement coeur tout en restant accessible à un opérateur circulant sur le niveau de travail.

Ainsi, avantageusement, un seul et même opérateur peut, en restant sur un même niveau, à savoir sur le plancher du niveau de travail, conduire l'installation pendant un cycle de production de profilé, en disposant de tout l'espace qui lui est nécessaire au voisinage immédiat de l'emplacement coeur et des extrudeuses, et, en temps masqué, c'est-à-dire pendant que se déroule l'opération d'extrusion, aller nettoyer et préparer un nouveau module d'outillage sur l'emplacement de préparation situé à proximité, en prévision du cycle de production suivant, puis échanger rapidement, grâce au dispositif de transfert par voie souterraine selon l'invention, le module d'outillage usagé contre le nouveau module d'outillage, au moment du changement de production. On peut ainsi réduire significativement la durée d'immobilisation de l'installation ente deux cycles de production successifs.

On notera en outre que, dans la mesure où le transfert des modules d'outillage s'opère par voie souterraine, via le sous-sol, ledit transfert est parfaitement sécurisé puisque la trajectoire du module d'outillage ne croise jamais le ou les chemins de circulation qui sont empruntés par l'opérateur pour circuler sur le plancher, au sein du niveau de travail.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

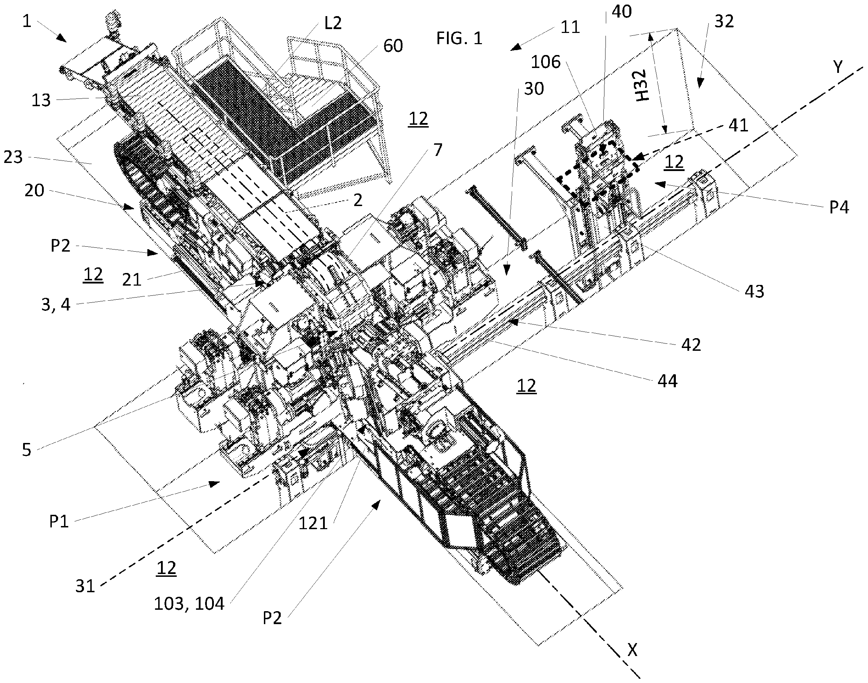

La figure 1 illustre, selon une vue d'ensemble en perspective, un exemple d'installation selon l'invention.

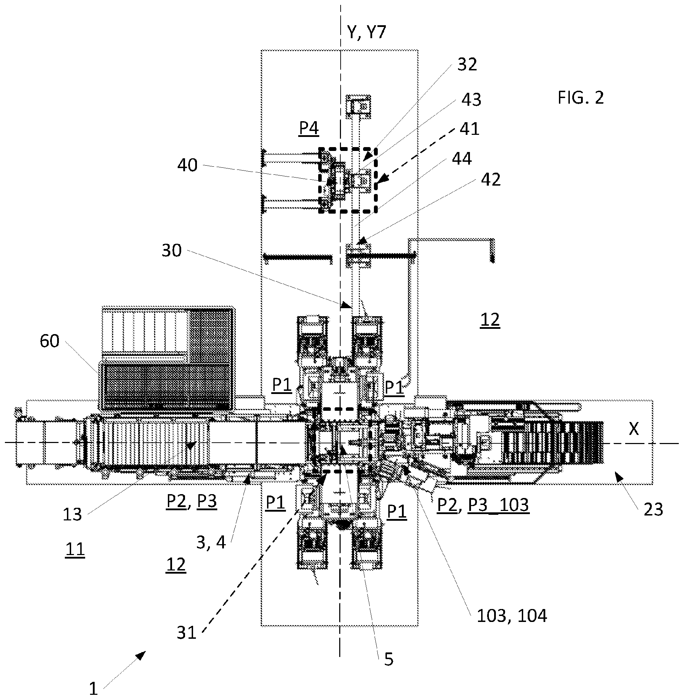

La figure 2 illustre, selon une vue de dessus, l'installation de la figure 1.

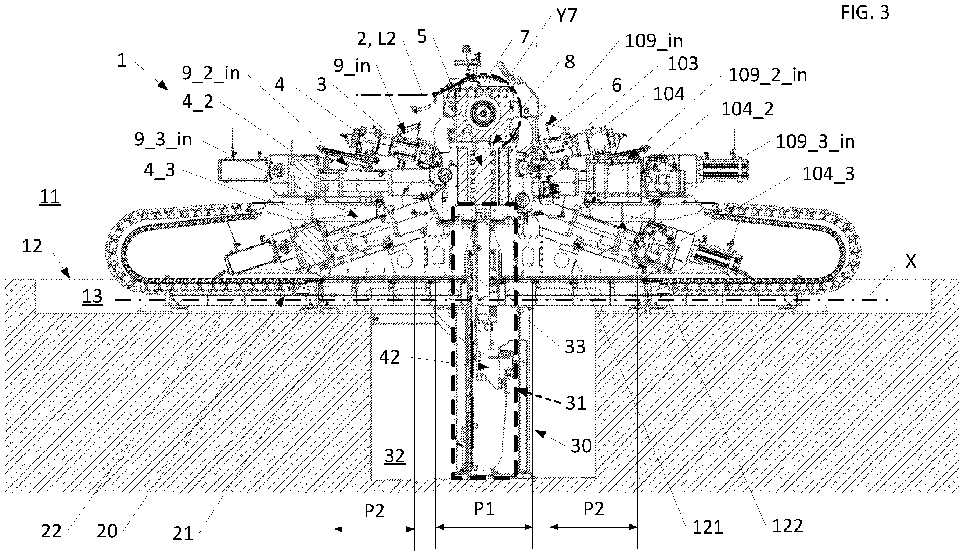

La figure 3 illustre l'installation des figures 1 et 2 en configuration de fermeture, selon une vue en coupe de face montrant simultanément le niveau de travail et le sous-sol.

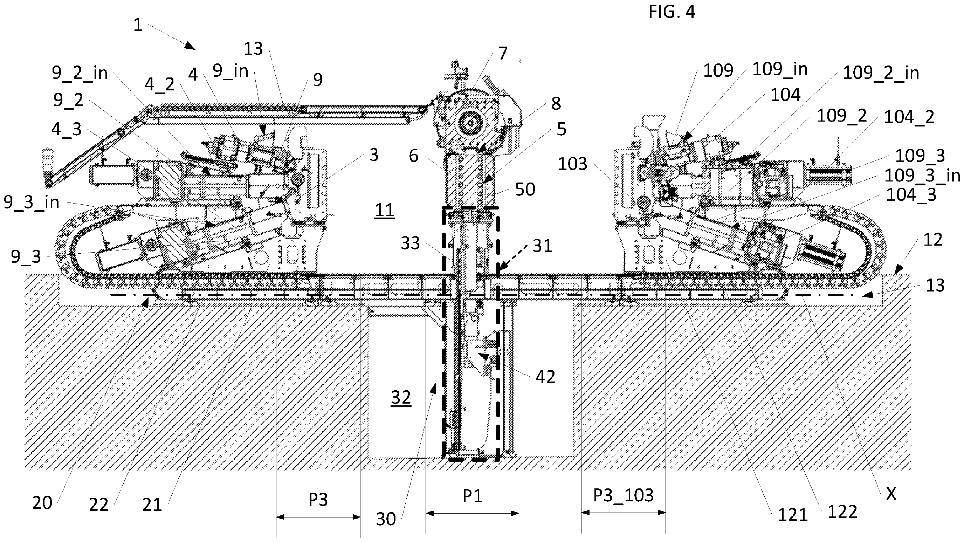

La figure 4 illustre l'installation des figures 1, 2 et 3 en configuration d'ouverture, selon une vue en coupe de face dans le même plan de coupe que la figure 4.

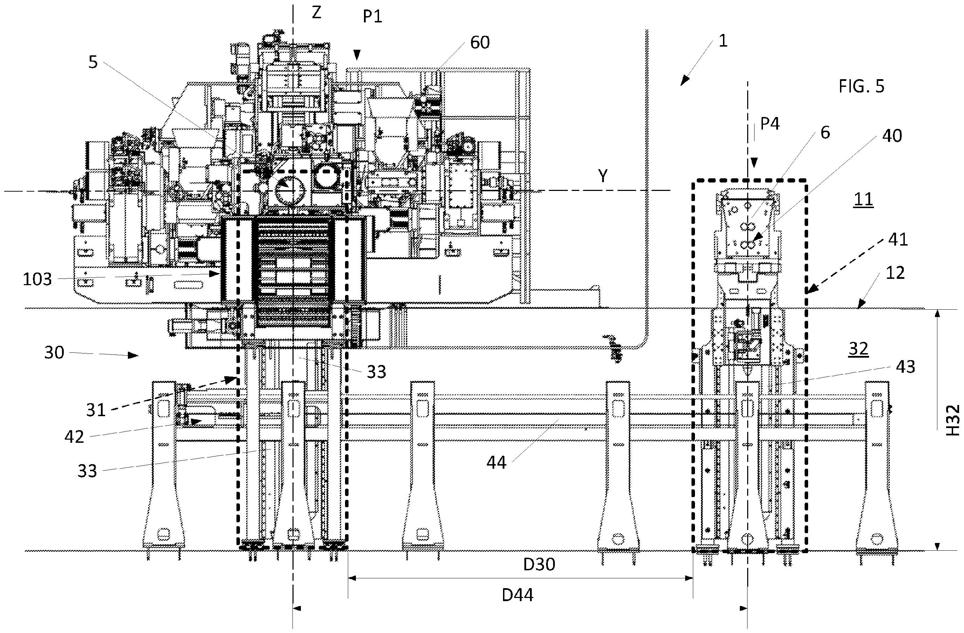

La figure 5 illustre l'installation des figures 1, 2, 3 et 4 selon une vue en coupe de côté faisant apparaître l'emplacement coeur ainsi qu'un poste de préparation distant, situés tous deux au-dessus du plancher, ainsi que les cages d'ascenseur qui permettent de transférer, via un convoyeur situé en sous-sol, sous le plancher, le module d'outillage depuis le poste de préparation jusqu'à l'emplacement coeur et réciproquement.

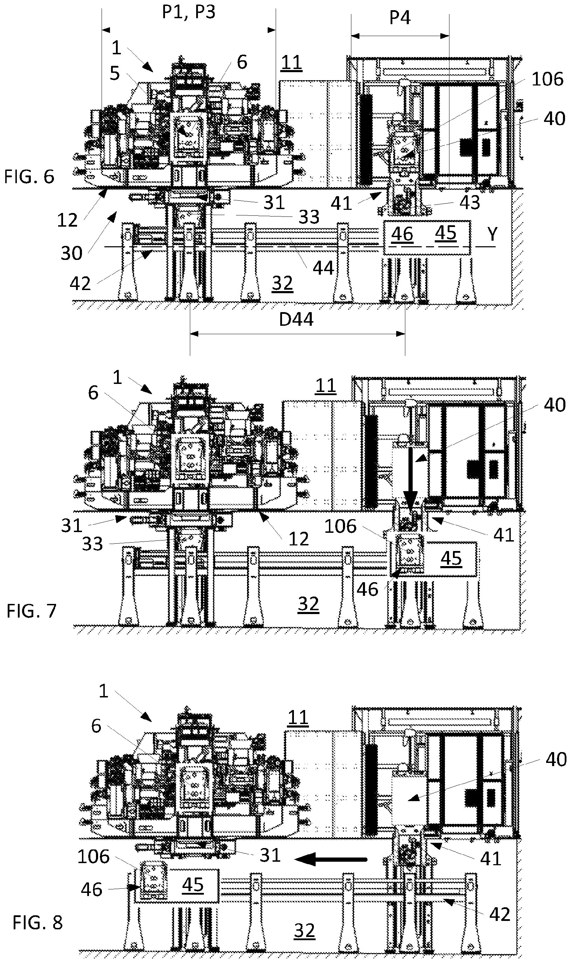

La figure 6 illustre, selon une vue en coupe de côté montrant le niveau de travail et le sous-sol, l'installation des figures 1 à 5 avec un premier module d'outillage engagé dans l'emplacement coeur pour un premier cycle de production, et un second module d'outillage nettoyé et préparé dans un emplacement de préparation distant, situé au niveau de travail.
La figure 7 illustre, selon la même vue de côté que la figure 6, la descente en sous-sol du second module d'outillage, depuis l'emplacement de préparation et à destination de l'emplacement coeur, à travers une seconde cage d'ascenseur prévue dans le plancher, et la réception du second module d'outillage, à la verticale de l'emplacement de préparation, sur un convoyeur du dispositif de transfert qui s'étend dans le sous-sol afin de relier la seconde cage d'ascenseur à la première cage d'ascenseur, et qui comprend un premier réceptacle destiné au premier module d'outillage, et un second réceptacle recevant le second module d'outillage.
La figure 8 illustre, en vue de côté, le déplacement en sous-sol des réceptacles du convoyeur, déplacement qui permet d'approcher le second module d'outillage de la première cage d'ascenseur, et donc de l'emplacement coeur, et de positionner le premier réceptacle du convoyeur en attente sous la première cage d'ascenseur, à la verticale de l'emplacement coeur.

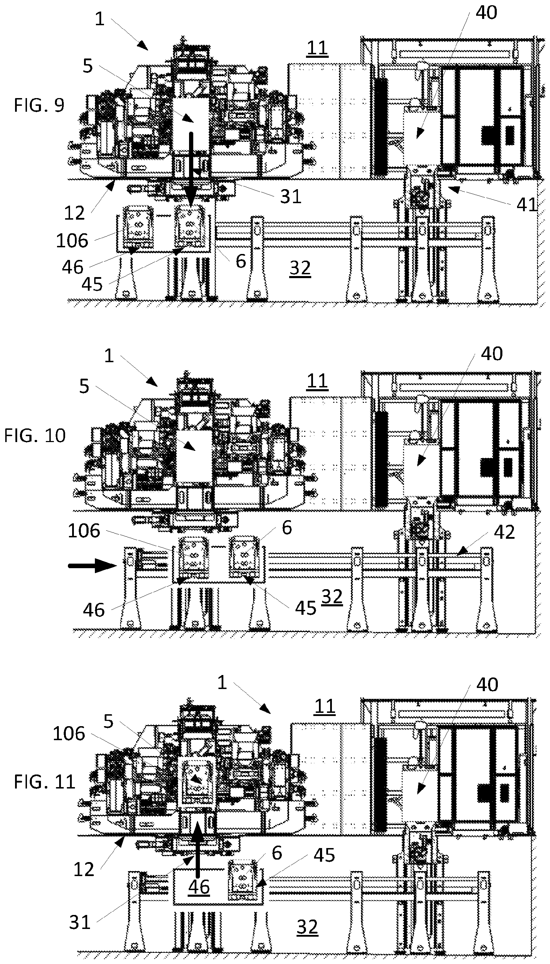

La figure 9 illustre, en vue de côté, la descente, à travers la première cage d'ascenseur, du premier module d'outillage, usagé, depuis l'emplacement coeur situé au-dessus du plancher jusqu'au premier réceptacle du convoyeur qui est placé en attente dans le sous-sol et qui assure la récupération dudit premier module d'outillage, destiné à être envoyé à l'emplacement de préparation.
La figure 10 illustre, en vue de côté, le positionnement du second réceptacle du convoyeur, et donc du second module d'outillage qu'il contient, en vis-à-vis de la première cage d'ascenseur.
La figure 11 illustre, en vue de côté, la remontée du second module d'outillage dans la première cage d'ascenseur, à travers le plancher, depuis le convoyeur du sous-sol à destination de l'emplacement coeur, et la mise en place du second module d'outillage dans l'emplacement coeur, en remplacement du premier module d'outillage, en vue d'un second cycle de production.

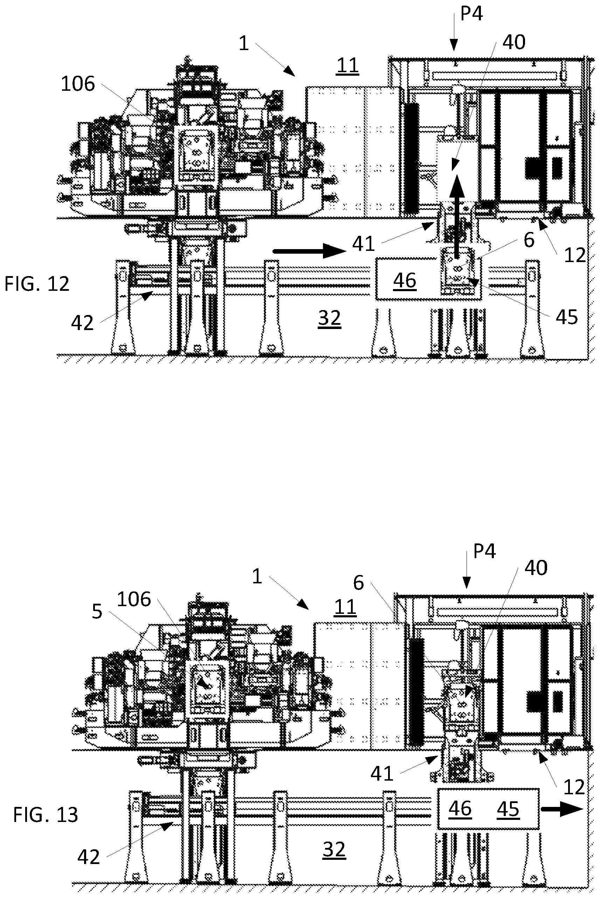

La figure 12 illustre, en vue de côté, l'acheminement du premier module d'outillage, sur le convoyeur en sous-sol, jusqu'à la seconde cage d'ascenseur, de sorte que le premier réceptacle, et donc le premier module d'outillage usagé qu'il contient, vienne se placer sous ladite seconde cage d'ascenseur, à la verticale de l'emplacement de préparation.
La figure 13 illustre, en vue de côté, la remontée du premier module d'outillage usagé depuis le convoyeur du sous-sol jusqu'à l'emplacement de préparation, à travers la seconde cage d'ascenseur, en vue du nettoyage dudit premier module d'outillage, puis le retour du second réceptacle du convoyeur à l'aplomb de la seconde cage d'ascenseur, en prévision du prochain changement de module d'outillage.

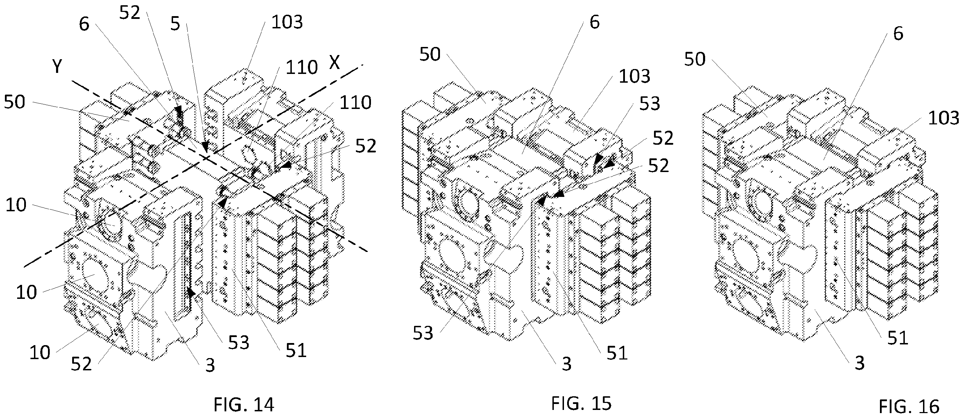

Les figures 14, 15 et 16 illustrent, selon des vues de détail en perspective, les étapes successives de mise en oeuvre d'un mécanisme de verrouillage comprenant un premier mors et un second mors qui viennent chacun en prise sur le premier module de tête destiné à porter au moins une première extrudeuse et sur un second module de tête destiné à porter au moins une seconde extrudeuse, lesdits premier et second modules de tête étant situés de part et d'autre de l'emplacement coeur, de sorte que les mors forcent le rapprochement mutuel desdits premier et second modules de tête et le pincement du module d'outillage entre lesdits premier et second modules de tête.

La présente invention concerne une installation 1 d'extrusion destinée à réaliser un profilé 2.

Tel que cela est notamment visible sur les figures 1, 3 et 4, ladite installation 1 comprend au moins un premier module de tête 3 qui porte au moins une première extrudeuse 4 destinée à délivrer un matériau constitutif du profilé 2.

Ledit matériau constitutif du profilé, ou « mélange », est de préférence à base de caoutchouc.

L'installation 1 comprend également un emplacement 5, dit « emplacement coeur » 5, qui est conçu pour recevoir un module d'outillage 6 afin de permettre la connexion de ladite au moins une première extrudeuse 4 audit module d'outillage 6 en vue de conformer le profilé 2.

Ainsi, l'emplacement coeur 5 correspondra, par convention, à la région de l'espace qui est occupée par le module d'outillage 6 lorsque ledit module d'outillage 6 est en service, pendant un cycle de production de profilé 2, et que ledit module d'outillage 6 se trouve raccordé à cet effet à la première extrudeuse 4 (et le cas échéant, si l'installation comporte plusieurs extrudeuses 4, 104,4_2, 4_3, 104_2, 104_3, aux différentes extrudeuses de ladite installation).

De préférence, l'installation 1 comprend un rouleau 7 qui est monté mobile en rotation en vis-à-vis de l'emplacement coeur 5, de sorte que lorsque le module d'outillage 6 se trouve à l'emplacement coeur 5, ledit module d'outillage 6 coopère avec ledit rouleau 7 pour, tel que cela est visible sur la figure 3, former un entrefer 8 qui permet de conformer le profilé 2, et plus particulièrement qui définit l'épaisseur dudit profilé 2.

Ledit rouleau 7, préférentiellement métallique, par exemple en acier, est de préférence motorisé et entraîné en rotation sur lui-même autour de son axe central Y7, afin d'accompagner la progression longitudinale du profilé 2 au fur et à mesure que ledit profilé 2 est généré dans l'entrefer 8. Le rouleau 7 présente de préférence un diamètre compris entre 15 cm et 300 cm, plus préférentiellement entre 90 cm et 300 cm.

Ledit rouleau 7 sert avantageusement d'une part à délimiter l'entrefer 8, qui correspond à l'espace compris, radialement par rapport à l'axe central Y7 du rouleau 7, entre la surface radialement externe dudit rouleau 7 et la face terminale du module d'outillage 6 qui se situe en vis-à-vis dudit rouleau 7 et qui couvre un secteur angulaire prédéterminé autour de l'axe central Y7, et d'autre part à permettre le refroidissement et la stabilisation dimensionnelle du profilé 2 après que ledit profilé 2 est sorti de l'entrefer 8.

L'axe central Y7 du rouleau 7 est de préférence orienté horizontalement, notamment pour des considérations de compacité et de stabilité mécanique du processus d'extrusion.

De façon connue en soi, la première extrudeuse 4 comprend de préférence une vis qui est entraînée en rotation autour de son axe longitudinal dans un fourreau 9, lequel fourreau 9 est fixé au premier module de tête 3.

Le fourreau 9 est de préférence pourvu, dans une portion amont, d'une zone d'alimentation 9_in comprenant un orifice d'entrée, par exemple sous forme d'une trémie, permettant d'introduire dans le fourreau 9 le matériau à travailler, par exemple sous forme de fragments de caoutchouc ou d'une bande continue de caoutchouc, et, dans une portion aval, d'un orifice de sortie qui permet au matériau travaillé (malaxé et chauffé) par la vis de l'extrudeuse de sortir dudit fourreau 9.

Le premier module de tête 3 est agencé de sorte à pouvoir mettre en communication, selon un circuit d'écoulement étanche, l'orifice de sortie du fourreau 9 avec un ou des canaux 10 correspondants ménagés dans le module d'outillage 6 (figures 14, 15, 16), afin de pouvoir acheminer jusqu'à l'entrefer 8, via ledit ou lesdits canaux 10 puis à travers ledit module d'outillage 6, le matériau qui est extrudé par l'extrudeuse 4.

Selon une possible application, le profilé 2 pourra être formé d'une seule nappe d'un seul matériau homogène, à base de caoutchouc.

Selon une autre possible application, le profilé 2 sera préférentiellement réalisé à partir de plusieurs matériaux de compositions différentes, à base de caoutchouc.

A cet effet, l'installation 1 comprendra de préférence une pluralité d'extrudeuses 4, 4_2, 4_3, 104, 104_2, 104_3 (...) de sorte que lesdits plusieurs matériaux à base de caoutchouc soient travaillés chacun par au moins une extrudeuse dédiée, parmi ladite pluralité d'extrudeuses, puis acheminés à travers le module d'outillage 6, et enfin réunis, ordonnés et conformés en un profilé 2, selon un agencement souhaité.

Plusieurs desdites extrudeuses, et de préférence toutes les extrudeuses 4, 4_2, 4_3, 104, 104_2, 104_3 (...), pourront être des extrudeuses à vis, et comprendront de préférence chacune leur fourreau 9, 9_2, 9_3, 109, 109_2, 109_3 (...), présentant chacun une zone d'alimentation 9_in, 9_2_in, 9_3_in, 109_in, 109_2_in, 109_3_in (...).

Les compositions des différents matériaux qui se juxtaposent dans la section droite du profilé 2, ainsi que les positions et les dimensions des emplacements desdits matériaux dans la section droite du profilé seront bien entendu prédéfinis en fonction de la destination dudit profilé 2.

A ce titre, on notera que ledit profilé 2 est de préférence destiné à former un constituant de bandage pneumatique, par exemple une bande de roulement, un flanc, ou même, notamment si ledit profilé est formé d'un seul matériau particulièrement fin, une nappe de gomme destinée à former une interface entre deux nappes qui se superposent au sein du bandage pneumatique.

Le profilé 2 est avantageusement produit en continu dans le sens de sa longueur, qui définit une direction dite « direction longitudinale » L2.

Selon l'invention, l'emplacement coeur 5 est situé à un premier niveau 11, dit « niveau de travail » 11, qui est pourvu d'un plancher 12 sur lequel un opérateur peut circuler pour accéder audit emplacement coeur 5 qui se trouve au-dessus dudit plancher 12.

Le plancher 12 formera avantageusement une surface porteuse sur laquelle un opérateur humain adulte peut se tenir, et se déplacer, en station debout.

Ledit plancher 12 pourra à cet effet être plein, par exemple en béton ou en métal, et/ou éventuellement ajouré, par exemple en intégrant des passerelles de type grilles métalliques.

Par l'expression « au-dessus du plancher », on indique que l'objet considéré se trouve dans la région de l'espace située verticalement du côté de la face supérieure du plancher 12, et donc à une altitude supérieure à l'altitude de ladite face supérieure dudit plancher 12.

Le plancher 12 constitue de préférence une surface fixe, c'est-à-dire immobile par rapport au référentiel d'implantation de l'installation 1.

De préférence, le plancher 12 forme une surface plane.

Bien qu'il ne soit pas exclu que le plancher 12 présente, notamment par endroits, une certaine inclinaison, de préférence inférieure à 10 degrés, inférieure à 6 degrés, voire inférieure à 3 degrés par rapport à l'horizontale, ledit plancher 12 formera préférentiellement une surface horizontale.

Afin d'offrir un dégagement vertical suffisant pour autoriser l'opérateur à se tenir en station debout, mais également pour permettre l'intégration et le fonctionnement du rouleau 7 ainsi que, le cas échéant, l'évacuation du profilé 2 par un tapis d'évacuation 13 placé en sortie du rouleau 7, la hauteur libre du niveau de travail 11 au-dessus du plancher 12 sera de préférence égale ou supérieure à 2,00 m, de préférence égale ou supérieure à 2,50 m, voire égale ou supérieure à 3,00 m. A titre indicatif, ladite hauteur libre pourra être égale à 2,80 m, le cas échéant +/- 20 cm.

Le plancher 12 comprend un premier poste P1, dit aussi « poste coeur P1 », qui est situé face à l'emplacement coeur 5, à une distance inférieure à 1 m, de préférence inférieure à 50 cm (donc à portée de bras), de la limite la plus proche dudit emplacement coeur 5, de sorte à desservir l'emplacement coeur 5.

Avantageusement, lorsque l'opérateur occupe ledit premier poste P1, il pourra surveiller visuellement ledit emplacement coeur 5 pendant la production et/ou intervenir physiquement au sein dudit emplacement coeur 5, et le cas échéant sur le rouleau 7.

Par convention, on considérera comme altitude de référence du plancher 12 l'altitude que présente le plancher 12 au niveau du premier poste P1, c'est-à-dire sensiblement au niveau de l'emplacement coeur 5.

De préférence, l'emplacement coeur 5, et par conséquent le module d'outillage 6 en service, se situe à l'intérieur d'une plage d'altitude comprise entre 0 cm et 200 cm, de préférence entre 30 cm et 180 cm, par rapport au plancher 12 du niveau de travail 11.

Ainsi, avantageusement, l'emplacement coeur 5 se trouvera à « hauteur d'homme » par rapport au plancher 12 qui l'entoure, de sorte que le premier poste P1 offrira un certain confort et une bonne ergonomie à l'opérateur pour des interventions dans et aux abords de l'emplacement coeur 5.

Avantageusement, le plancher 12 se prolonge autour de l'installation 1, et notamment autour des extrudeuses 4, 4_2, 4_3, 104, 104_2, 104_3 de sorte à pouvoir desservir, en sus du premier poste P1, d'autres postes P2, P3, P4, qui seront détaillés ci-après, parmi lesquels un ou des seconds postes d'alimentation P2 permettant à l'opérateur de surveiller et d'intervenir au niveau de la ou des zones d'alimentation 9_in du ou des fourreaux 9, 9_2, 9_3, 109, 109_2, 109_3 respectifs de la ou des extrudeuses 4, 4_2, 4_3, 104, 104_2, 104_3, un ou des troisièmes postes P3, P3_103 permettant de nettoyer le ou les modules de tête 3, 103 lorsque l'installation 1 se trouve en configuration d'ouverture après un cycle d'extrusion, et au moins un poste de préparation P4 permettant de préparer et nettoyer un module d'outillage 6, 106 en temps masqué.

Ainsi, en particulier, la première extrudeuse 4 présente de préférence une zone d'alimentation 9_in qui se situe au-dessus du plancher 12, et qui est accessible à l'opérateur depuis un second poste P2 formé par une portion du plancher 12 du niveau de travail 11, c'est-à-dire du même plancher 12 que celui comportant le premier poste P1 desservant l'emplacement coeur 5.

Ladite zone d'alimentation 9_in se situe à ce titre de préférence à hauteur d'homme, c'est-à-dire dans une plage d'altitude comprise entre 0 cm et 200 cm, de préférence entre 30 cm et 180 cm, par rapport audit plancher 12 du niveau de travail 11, et plus particulièrement par rapport à l'altitude que possède ledit plancher 12 au niveau du second poste P2. Depuis ce second poste P2, l'opérateur peut ainsi surveiller visuellement et le cas échéant intervenir manuellement sur l'alimentation de la première extrudeuse 4 en matériau à extruder, afin notamment d'assurer le réapprovisionnement de la première extrudeuse 4 en matériau au fur et à mesure que ledit matériau est consommé pour produire le profilé 2.

Plus globalement, l'installation 1 comprenant plusieurs extrudeuses 4, 4_2, 4_3, 104, 104_2, 104_3 contribuant à alimenter le module d'outillage 6, les zones d'alimentation 9_in, 9_2_in, 9_3_in, 109_in, 109_2_in, 109_3_in respectives de plusieurs desdites extrudeuses, et de préférence de la totalité des extrudeuses 4, 4_2, 4_3, 104, 104_2, 104_3 de l'installation, se situent au-dessus du plancher 12, plus préférentiellement dans une plage d'altitude comprise entre 0 cm et 200 cm, voire entre 30 cm et 180 cm, de sorte à être toutes accessibles à un opérateur qui se trouve sur ledit plancher 12, au niveau de travail 11.

Ainsi, l'opérateur peut facilement, sans quitter le plancher 12, et donc sans avoir à changer de niveau d'altitude, se rendre aux différents postes P2 d'alimentation, depuis ou en passant par le poste coeur P1, afin de surveiller les zones d'alimentation des différentes extrudeuses et au besoin y intervenir, par exemple pour réapprovisionner lesdites extrudeuses, ou bien empêcher un bourrage (engorgement) ou remédier à un tel bourrage.

Par ailleurs, l'installation 1 comprend de préférence un dispositif d'accouplement 20 qui permet de déplacer le premier module de tête 3 sur le plancher 12 du niveau de travail 11, de sorte à faire alternativement passer le premier module de tête 3 entre d'une part une configuration de fermeture, ici représentée notamment sur les figures 1 et 3, dans laquelle ledit premier module de tête 3 est rapproché de l'emplacement coeur 5 de sorte à être pressé au contact du module d'outillage 6 et à mettre ainsi en communication la première extrudeuse 4, et le cas échéant l'ensemble des extrudeuses 4, 4_2, 4_3 portées par ledit premier module de tête 3, avec ledit module d'outillage 6, et d'autre part une configuration d'ouverture, ici illustrée sur la figure 4, dans laquelle le premier module de tête 3 est éloigné de l'emplacement coeur 5 et donc du module d'outillage 6, tout en étant accessible à un opérateur qui se trouve sur le plancher 12, au niveau de travail 11.

Avantageusement, la ou les extrudeuses 4, 4_2, 4_3 portées par le premier module de tête 3, et plus préférentiellement l'ensemble des extrudeuses de l'installation, se déplacent donc en restant au niveau de travail 11, et restent ainsi accessibles à l'opérateur depuis le plancher 12 aussi bien en configuration de fermeture, pendant un cycle de production, qu'en configuration d'ouverture, à l'occasion d'une interruption de la production en vue d'une opération de maintenance ou d'un changement de production.

En particulier, en configuration d'ouverture, l'opérateur peut donc avantageusement, depuis le plancher 12, et plus particulièrement depuis une portion dudit plancher 12 formant un troisième poste P3, dit « poste d'entretien » P3, intervenir sur le premier module de tête 3 et/ou les extrudeuses 4, 4_2, 4_3 portées par le premier module de tête, et en particulier nettoyer le premier module de tête 3 d'éventuels résidus de matériaux extrudés, lors des changements de production, et notamment lors des changements de module d'outillage 6, 106.

Plus particulièrement, le poste d'entretien P3 permettra à l'opérateur d'accéder à, et de nettoyer, la face terminale du premier module de tête 3 qui, en configuration de fermeture, vient au contact du module d'outillage 6 pour former un plan de joint étanche, et qui est dégagée du module d'outillage et donc apparente en configuration d'ouverture.

L'opérateur peut avantageusement passer du premier poste P1 (poste coeur), ou de l'un des second postes P2 (postes d'alimentation), au troisième poste P3 (poste d'entretien), en restant au même niveau de travail 11, sans avoir à quitter le plancher P12, et donc, de préférence, en restant à une altitude constante.

Les mouvements alternés d'avance, pour rapprocher le premier module de tête 3 de l'emplacement coeur 5, puis de recul, pour éloigner le premier module de tête 3 de l'emplacement coeur 5, assurés par le dispositif d'accouplement 20, s'effectuent selon une première direction principale X, horizontale, dite « direction d'accouplement » X.

Le dispositif d' accouplement 20 possède de préférence à cet effet un premier chariot 21 qui porte le premier module de tête 3 et qui est guidé en translation rectiligne le long d'un premier rail 22 selon ladite direction d'accouplement X, et donc parallèlement au plancher 12. Le premier chariot 21 peut être entraîné par tout organe de motorisation approprié, par exemple par un vérin, piloté par une unité de commande adaptée.

Le premier rail 22 est avantageusement porté par et fixé sur la face supérieure du plancher 12.

Selon une possibilité d'agencement illustrée sur les figures 1, 3 et 4, le rail 22 peut éventuellement être placé dans un logement 23 borgne qui aura été creusé dans l'épaisseur du plancher 12, du côté de la face supérieure dudit plancher 12, et ce afin de masquer et sécuriser le rail 22 et une partie du chariot 21 par rapport à l'opérateur qui se tient sur le plancher 12, notamment par rapport à l'opérateur qui se tient au premier poste coeur P1 ou au troisième poste d'entretien P3. Le fond du logement 23 se trouvera à une altitude proche de celle du plancher 12, et donc bien supérieure à l'altitude du sol du sous-sol 32, par exemple au moins 1,75 m, de préférence au moins 1,90 m, voire au moins 2,10 m au-dessus du sol du sous-sol 32. A ce titre, la profondeur du logement 23, considérée verticalement par rapport à la face supérieure du plancher 12, sera de préférence inférieure à 50 cm, voire inférieure à 40 cm, et pourra être par exemple comprise entre 10 cm et 50 cm, entre 20 cm et 50 cm, voire entre 20 cm et 40 cm.

De préférence, l'installation 1 comprend, au niveau de travail 11, un second module de tête 103 portant au moins une seconde extrudeuse 104.

Plus préférentiellement, à l'instar du premier module de tête 3 qui porte plusieurs extrudeuses 4, 4_2, 4_3 (...), par exemple trois ou quatre extrudeuses, le second module de tête 103 portera plusieurs extrudeuses 104, 104_2, 104_3, par exemple trois ou quatre extrudeuses. Ainsi, chaque module de tête 3, 103 pourra, dans l'absolu, délivrer simultanément au module d'outillage 6 plusieurs matériaux différents, constitutifs du profilé 2, chaque matériau étant issu spécifiquement d'au moins l'une des extrudeuses 4, 4_2, 4_3, 104, 104_2, 104_3.

Tout comme le premier module de tête 3, et tel que cela est visible sur la figure 14, le second module de tête 103 comportera des canaux 110 recevant chacun l'une des extrudeuses 104, 104_2, 104_3 et sera agencé pour venir se plaquer au contact étanche d'une face du module d'outillage 6 afin de mettre chacune des extrudeuses qu'il porte en communication avec une voie correspondante dudit module d'outillage 6, c'est-à-dire avec une voie desservie par le canal 110 concerné.

De manière analogue au premier module de tête 3, le second module de tête 103 sera de préférence monté mobile sur un second chariot 121 guidé en translation sur un second rail 122 porté par la face supérieure du plancher 12, lequel second rail 122 est de préférence rectiligne, horizontal, et aligné avec le premier rail 22 selon la direction d'accouplement X.

Ainsi, de préférence, le premier et le second module de tête 3, 103 sont montés mobiles sur le plancher 12 selon une première direction horizontale X, dite direction d'accouplement X, en opposition l'un de l'autre, de part et d'autre de l'emplacement coeur 5, de sorte à pouvoir adopter alternativement d'une part une configuration d'ouverture, ici illustrée sur la figure 4, configuration d'ouverture dans laquelle lesdits premier et second modules de tête 3, 103 sont chacun éloignés de l'emplacement coeur 5 selon la direction d'accouplement X, de sorte à permettre l'engagement du module d'outillage 6 dans l'emplacement coeur 5 ou l'extraction du module d'outillage 6 hors dudit emplacement coeur 5, et d'autre part une configuration de fermeture, ici illustrée notamment sur la figure 3, configuration de fermeture dans laquelle lesdits premier et second modules de tête 3, 103 sont rapprochés l'un de l'autre selon la direction d'accouplement X, de sorte à être plaqués en compression contre le module d'outillage 6 se trouvant à l'emplacement coeur 5, de part et d'autre dudit module d'outillage 6 selon la direction d'accouplement X, pour mettre la première extrudeuse 4, le cas échéant le premier groupe d'extrudeuses 4, 4_2, 4_3 portées par le premier module de tête 3, et la seconde extrudeuse 104, le cas échéant le second groupe d'extrudeuses 104, 104_2, 104_3 portées par le second module de tête 103, en communication avec le module d'outillage 6.

Avantageusement, pour passer de la configuration de fermeture à la configuration d'ouverture et réciproquement, les premier et second modules de tête 3, 103 s'éloignent et se rapprochent alternativement l'un de l'autre selon une direction d'accouplement X commune et en se déplaçant dans des sens opposés (c'est-à-dire de façon antagoniste), de façon sensiblement symétrique de part et d'autre du plan médian vertical, normal à la direction d'accouplement X, et qui divise fictivement l'emplacement coeur 5 en deux moitiés symétriques.

Avantageusement, en configuration de fermeture, le module d'outillage 6 se retrouve ainsi pincé de façon très stable, de manière étanche, entre les deux modules de tête 3, 103, ici de préférence selon deux plans de joint respectifs qui forment deux surfaces planes verticales, normales à la direction d'accouplement X.

De préférence, comme c'est le cas pour le premier module de tête 3, le second module de tête 103, lorsqu'il se trouve en configuration d'ouverture, reste au-dessus du plancher 12, de préférence à hauteur d'homme au sens indiqué plus haut et tel que cela est visible sur la figure 4, si bien qu'il est accessible à l'opérateur qui se trouve sur ledit plancher 12, au niveau de travail 11, en l'espèce à un poste d'entretien noté P3_103.

Ainsi, plus particulièrement, en configuration d'ouverture, tout comme de préférence également en configuration de fermeture, chacun des premier et second modules de têtes 3, 103 se situe préférentiellement à l'intérieur d'une plage d'altitude comprise entre 0 cm et 200 cm, de préférence entre 30 cm et 180 cm, par rapport au plancher 12 du niveau de travail 11, de sorte à se trouver à hauteur d'homme pour l'opérateur lorsque ledit opérateur se trouve au poste d'entretien P3, P3_103.

Par ailleurs, le module d'outillage 6 comprend de préférence un ensemble de plaques parallèles empilées les unes contre les autres dans le sens de leur épaisseur, ici selon la direction d'accouplement X.

Les différentes voies permettant d'acheminer le ou les matériaux en provenance des extrudeuses 4, 4_2, 4_3, 104, 104_2, 104_3 sont avantageusement creusées à la surface des différentes plaques, dans l'épaisseur de chaque plaque considérée, de sorte que la superposition étanche de deux plaques voisines délimite la section de passage de la voie considérée. Au besoin, et en l'espèce lorsque le module d'outillage 6 comprend plus de deux plaques superposées, des conduits traversants, ici orientés selon la direction d'accouplement (X), sont prévus pour acheminer le ou les mélanges entrant depuis la surface apparente des plaques extrémales vers les plaques situées dans les couches plus profondes de l'empilement.

Un tel module d'outillage 6 en plaques, modulaire et compact, peut avantageusement être facilement reconfiguré en modifiant tout ou partie du jeu de plaques, tout en conservant par ailleurs à l'identique l'agencement des extrudeuses et des modules de tête 3, 103 destinés à alimenter ledit module d'outillage 6 en matériaux constitutifs du profilé.

En outre, le serrage du module d'outillage 6 entre les deux modules de tête 3, 103 a pour effet de presser les plaques les unes contre les autres, dans le sens de leur épaisseur, et contribue donc à la stabilité et à l'étanchéité du module d'outillage 6.

Selon l'invention, l'installation 1 comprend un dispositif 30 de transfert par voie souterraine qui permet d'acheminer le module d'outillage 6 jusqu'à l'emplacement coeur 5 et/ou, respectivement, de dégager le module d'outillage 6 hors dudit emplacement coeur 5, ledit dispositif 30 de transfert par voie souterraine comprenant à cet effet au moins une première cage d'ascenseur 31 qui est conçue pour faire passer ledit module d'outillage 6 à travers le plancher 12, depuis, ou respectivement vers, un second niveau 32, dit « sous-sol » 32, qui est situé sous le plancher 12 du niveau de travail 11.

Le sous-sol 32 s'étend, par rapport au plancher 12, du côté opposé au niveau de travail 11, verticalement sous ledit niveau de travail 11, en vis-à-vis de la face inférieure dudit plancher 12, et occupe ainsi une région de l'espace correspondant à une plage d'altitude strictement inférieure à la plage d'altitude occupée par le niveau de travail 11, et à la plage d'altitude occupée (et remplie) par le plancher 12 lui-même, qui forme une séparation matérielle entre ledit niveau de travail 11 et le sous-sol 32.

Avantageusement, grâce à l'agencement à deux niveaux 11, 32 et au dispositif 30 de transfert par voie souterraine selon l'invention, on peut introduire le module d'outillage 6 dans l'emplacement coeur 5 en vue d'une production, puis extraire ce même module d'outillage 6 hors de l'emplacement coeur 5, en passant par le dessous de l'installation 1, en traversant le plancher 12, ce qui permet notamment d'éviter que le dispositif de transfert 30 n'encombre le niveau de travail 11 ou que le chemin parcouru par le module d'outillage 6 pendant les opérations de manutention ne croise le ou les chemins empruntés par l'opérateur sur le plancher 12, et plus particulièrement les chemins du plancher 12 qui relient entre eux les différents postes P1, P2, P3, P4.

Ceci contribue à la sûreté de fonctionnement et à la compacité de l'installation 1.

On notera que, bien qu'il soit envisageable, dans l'absolu, que le passage en sous-sol procuré par le dispositif 30 de transfert puisse être dédié exclusivement à l'amenée du module d'outillage 6 jusqu'à l'emplacement coeur 5, ou au contraire exclusivement à l'évacuation du module d'outillage 6 hors de l'emplacement coeur 5, on préférera, notamment par souci de sécurité, de compacité, et de minimisation de coûts d'implantation, que le dispositif 30 de transfert utilise le sous-sol 32 aussi bien pour amener que pour évacuer le module d'outillage 6.

La première cage d'ascenseur 31 offre une ouverture traversante dans l'épaisseur du plancher 12 qui sépare le niveau de travail 11 du sous-sol 12, et forme donc un puits qui interrompt localement le plancher 12 pour mettre en communication le niveau de travail 11 avec le sous-sol 32.

Le dispositif de transfert 30, et plus particulièrement la première cage d'ascenseur 31, comprend de préférence un premier mât élévateur 33 qui est agencé pour assurer le transfert vertical, de préférence en translation rectiligne selon la direction verticale Z, du module d'outillage 6 entre le dessus du plancher 12 et le sous-sol 32 situé en-dessous dudit plancher 12, c'est-à-dire en descente, et réciproquement, entre le sous-sol 32 et le dessus du plancher 12, c'est-à-dire en montée.

A titre indicatif, la hauteur libre H32 en sous-sol, c'est-à-dire la hauteur délimitée par le sol du sous-sol 32 d'une part et le plafond dudit sous-sol que constitue la face inférieure du plancher 12 du niveau de travail 11 d'autre part, sera de préférence égale ou supérieure à 1,90 m, préférentiellement comprise entre 2,00 m et 2,50 m, par exemple égale à 2,10 m +/- 10cm.

Une telle hauteur libre en sous-sol H32 sera avantageusement suffisante d'une part pour permettre le passage du module d'outillage 6, et d'autre part, de préférence, pour permettre à un opérateur humain adulte de circuler en station debout dans ledit sous-sol 32 pour pouvoir inspecter, et au besoin intervenir sur, la portion souterraine du dispositif de transfert 30, c'est-à-dire la portion dudit dispositif de transfert 30 qui est située dans le sous-sol 32.

L'opérateur pourra de préférence accéder au sous-sol 32 depuis le plancher 12 du niveau de travail 11, et réciproquement, au moyen d'un escalier. Ledit escalier comprendra par exemple entre 8 et 12 marches, lesdites marches présentant une hauteur individuelle comprise entre 16 cm et 22 cm.

De préférence, le rouleau 7 mentionné plus haut est monté mobile en rotation au-dessus de l'emplacement coeur 5, à la verticale de la première cage d'ascenseur 31.

Un tel étagement vertical améliore avantageusement la compacité de l'installation 1, puisqu'il permet de réaliser l'extrusion du profilé 2, et l'évacuation dudit profilé 2 sur le convoyeur de sortie 3, par le dessus de l'emplacement coeur 5, tandis que les opérations de mise en place du module d'outillage 6 et donc de définition de l'entrefer 8, puis les opérations de retrait et de remplacement du module d'outillage 6, sont réalisées par le dessous dudit emplacement coeur 5, sans qu'il soit nécessaire de modifier la position du rouleau 7.

En référence à ce qui a été décrit plus haut, l'installation 1 est de préférence telle que, en configuration d'ouverture, le premier module de tête 3, et respectivement, s'il y a lieu, le second module de tête 103, sont chacun éloignés de l'emplacement coeur 5 selon la direction d'accouplement X, de sorte à permettre au dispositif 30 de transfert par voie souterraine susmentionné d'engager le module d'outillage 6 dans l'emplacement coeur 5 et/ou de retirer le module d'outillage 6 dudit emplacement coeur 5.

Par ailleurs, l'installation 1 comporte de préférence un emplacement de préparation 40, qui est distinct et distant de l'emplacement coeur 5, et qui est prévu pour permettre une préparation, en particulier un nettoyage, du module d'outillage 6 en-dehors de l'emplacement coeur 5.

Le dispositif 30 de transfert par voie souterraine est alors agencé de sorte à pouvoir acheminer le module d'outillage 6, en passant à travers le plancher 12 par la première cage d'ascenseur 31, de l'emplacement de préparation 40 jusqu'à l'emplacement coeur 5, et réciproquement, de l'emplacement coeur 5 jusqu'à l'emplacement de préparation 40.

Avantageusement, cette séparation spatiale de l'emplacement coeur 5 et de l'emplacement de préparation 40, et la liaison, de préférence motorisée et préférentiellement automatique, assurée entre ces emplacements 5, 40 par le dispositif 30 de transfert, permettent de préparer un second module d'outillage 106 en temps masqué, pendant qu'un premier module d'outillage 6 est en production, puis, lors du changement de production, de faire revenir le premier module d'outillage 6 jusqu'à l'emplacement de préparation 40 et de le remplacer, à l'emplacement coeur 5, par le second module d'outillage 106, de sorte que l'on peut nettoyer, reconfigurer ou changer ledit premier module d'outillage 6 en temps masqué, pendant que le second module d'outillage 106 est en production.

L'emplacement de préparation 40 est avantageusement conçu pour permettre à un opérateur d'éliminer du module d'outillage 6 les résidus de mélanges issus d'une production, et le cas échéant de démonter les plaques constitutives du module d'outillage 6 pour nettoyer lesdites plaques, et réassembler lesdites plaques soit à l'identique, pour reconstituer le même module d'outillage 6, soit en substituant éventuellement à tout ou partie desdites plaques d'autres plaques, présentant un agencement de voies différent, afin de reconfigurer ledit module d'outillage 6 en vue de la production d'un profilé 2 différent.

Dans l'absolu, on pourrait avoir un emplacement de préparation 40 situé dans le sous-sol 32.

Toutefois, de préférence, et tel que cela est notamment visible sur les figures 1 et 5, l'emplacement de préparation 40 se trouve au niveau de travail 11, au-dessus du plancher 12, et plus préférentiellement à hauteur d'homme (soit, comme indiqué plus haut, dans une plage d'altitude comprise entre 0 cm et 200 cm, de préférence entre 30 cm et 180 cm, par rapport au plancher 12), de sorte à être accessible à l'opérateur circulant sur le plancher 12.

Ainsi, le plancher 12 de l'installation 1 comprendra de préférence un quatrième poste P4, dit « poste de préparation » P4, à partir duquel l'opérateur peut, sans avoir à changer de niveau par rapport au poste coeur P1, et/ou par rapport à l'un des postes P2 d'alimentation et/ou P3 d'entretien, intervenir sur le module d'outillage 6, 106 présent à l'emplacement de préparation 40.

A cet effet, le dispositif 30 de transfert par voie souterraine comprend de préférence une seconde cage d'ascenseur 41 qui est située à distance de la première cage d'ascenseur 31, qui est reliée à la première cage d'ascenseur 31 par un convoyeur 42 situé dans le sous-sol 32, et qui est conçue pour faire passer, et plus particulièrement pour descendre, le module d'outillage 6 à travers le plancher 12, depuis l'emplacement de préparation 40 situé au niveau de travail 11, au-dessus du plancher 12, jusqu'au convoyeur 42 situé en sous-sol 32, sous le plancher 12, et, respectivement, pour faire passer, et plus particulièrement pour remonter, le module d'outillage 6 du convoyeur 42 situé en sous-sol 32, sous le plancher 12, jusqu'à l'emplacement de préparation 40 situé au-dessus du plancher 12.

De manière analogue à la première cage d'ascenseur 31, la seconde cage d'ascenseur 41 offre une ouverture traversante dans l'épaisseur du plancher 12 qui sépare le niveau de travail 11 du sous-sol 12, et forme donc un second puits, distinct et distant de la première cage d'ascenseur 31, qui met localement en communication le niveau de travail 11 avec le sous-sol 32.

De même, le dispositif de transfert 30, et plus particulièrement la seconde cage d'ascenseur 41, comprend de préférence un second mât élévateur 43, ici distant et distinct du premier mât élévateur 33 présent dans la première cage d'ascenseur 31, ledit second mât élévateur 43 étant agencé pour assurer le transfert vertical, au sein de la seconde cage d'ascenseur 41, de préférence en translation rectiligne selon la direction verticale Z, du module d'outillage 6, entre le sous-sol 32 situé en dessous du plancher 12 et le dessus du plancher 12, et réciproquement.

On notera que, sur la figure 1, par simple commodité de représentation, le plancher 12 a été rendu transparent aux abords de l'emplacement de préparation 40, de manière à faire apparaître le détail du sous-sol 32, de la seconde cage d'ascenseur 41, du convoyeur 42 et du second mât élévateur 43.

La distance D30 considérée horizontalement et qui sépare la seconde cage d'ascenseur 41 de la première cage d'ascenseur 31, dite « distance de dégagement » D30, est bien entendu suffisante pour éviter toute interférence ou toute gêne entre l'emplacement coeur 5 et l'emplacement de préparation 40, tout en étant suffisamment réduite pour limiter le coût du dispositif de transfert 30 et plus globalement de l'installation 1. A ce titre, ladite distance de dégagement D30 est de préférence comprise entre 1,50 m et 10 m, de préférence entre 1,80 m et 5 m.

Tel que cela est notamment visible sur la figure 5, le convoyeur 42, contenu dans le sous-sol 32, pourra comporter un rail de transfert 44 qui relie la première cage d'ascenseur 31 à la seconde cage d'ascenseur 41, et sur lequel circule au moins un réceptacle 45, 46 destiné à recevoir le module d'outillage 6.

De préférence, ledit rail de transfert 44 est horizontal, pour simplifier l'agencement du convoyeur 42 et limiter l'énergie à fournir pour les déplacements du réceptacle 45, 46. Ledit rail de transfert 44 est de préférence rectiligne, afin d'être le plus court possible au regard de la distance de dégagement D30 à couvrir et d'assurer un convoyage simple et stable du réceptacle 45, 46.

A titre indicatif, la course D44 offerte par le rail de transfert 44 pour passer entre d'une part l'aplomb vertical du centre de l'emplacement coeur 5 dans la première cage d'ascenseur 31 et l'aplomb vertical du centre de l'emplacement de préparation 40 dans la seconde cage d'ascenseur 41, pourra être comprise entre 2,00 m et 12 m, par exemple entre 2,50 m et 6 m, voire entre 3 m et 5 m.

Avantageusement, le fait de réaliser le transfert du module d'outillage 6 entre l'emplacement de préparation 40 et l'emplacement coeur 5, et inversement, en passant par le sous-sol 32, dans lequel ledit module d'outillage 6 pénètre par l'une des cages d'ascenseur 41, 31 pour en ressortir par l'autre cage d'ascenseur 31, 41, après avoir parcouru à travers ledit sous-sol 32, sur le convoyeur 42, la distance de dégagement D30 qui sépare lesdites cages d'ascenseur 31, 41 l'une de l'autre, et plus particulièrement après avoir parcouru la course D44 susmentionnée, permet avantageusement d'éviter de déplacer ledit module d'outillage 6 au sein du niveau de travail 11, à hauteur de l'opérateur présent sur le plancher 12 ou bien en passant au-dessus de l'opérateur sous forme d'une charge suspendue à une grue ou à un pont roulant qui surplomberait le plancher 12. En procédant à un transfert hors du niveau de travail 11, sous ledit niveau de travail 11, on évite ainsi tout risque de collision du module d'outillage 6 avec, ou de chute du module d'outillage 6 sur, un opérateur, le plancher 12, ou l'un des composants de l'installation 1 présents au-dessus dudit plancher 12.

De préférence, la différence d'altitude entre le premier poste P1, c'est-à-dire le poste coeur P1 permettant à l'opérateur de travailler à l'emplacement coeur 5, et le quatrième poste P4, c'est-à-dire le poste permettant à l'opérateur de travailler à l'emplacement de préparation 40, est inférieure à 50 cm, de préférence inférieure à 25 cm, et plus préférentiellement nulle, de sorte que le premier poste P1 et le quatrième poste P4 sont sensiblement, voire exactement à la même altitude.

L'implantation des premier et quatrième postes P1, P4 à un même niveau de travail 11, et plus préférentiellement à une même altitude, permet avantageusement à un même opérateur de gérer facilement à la fois la production d'une part, et plus particulièrement la fermeture des modules de tête 3, 103 sur le module d'outillage 6 en vue d'une production puis le démarrage et le suivi d'une production, au niveau de l'emplacement coeur 5, et la préparation des modules d'outillage 6, 106 d'autre part, en se rendant à l'emplacement de préparation 40, de préférence pendant que la production d'un profilé 2 est en cours.

A ce titre, on notera qu'il existe de préférence, sur le plancher 12 du niveau de travail 11, au moins un chemin sensiblement voire exactement horizontal qui permet à l'opérateur de passer du premier poste P1 au quatrième poste P4, ici de préférence en marchant, sans avoir à changer d'altitude, et notamment sans avoir à emprunter d'escalier.

Selon agencement préférentiel, la première cage d'ascenseur 31 est située sous l'emplacement coeur 5, à la verticale de l'emplacement coeur 5 et du rouleau 7.

Ceci simplifie la structure et améliore la compacité de l'installation 1 et de la première cage d'ascenseur 31, ainsi que du premier mât élévateur associé 33.

De même, la seconde cage d'ascenseur 41 se trouve de préférence sous l'emplacement de préparation 40, à la verticale dudit emplacement de préparation 40.

Tel que cela est notamment visible sur les figures 1 2 et 5, ledit emplacement de préparation 40 et la seconde cage d'ascenseur 41 correspondante sont de préférence décalés par rapport à l'emplacement coeur 5 et à la première cage d'ascenseur 31 selon une seconde direction horizontale Y qui est transverse, et de préférence perpendiculaire, à la direction d'accouplement X, et selon laquelle est orienté le convoyeur 42 placé en sous-sol 32. La distance de dégagement D30 est ainsi de préférence mesurée selon ladite seconde direction horizontale Y.

Le sous-sol 32 forme ainsi une galerie souterraine qui est couverte par le plancher 12 et qui s'étend selon la direction horizontale Y pour permettre la circulation cachée, sous le plancher 12, du ou des modules d'outillage 6, 106, entre les première et seconde cages d'ascenseur 31, 41, et donc plus globalement entre l'emplacement coeur 5 et l'emplacement de préparation 40.

De préférence, le plancher 12 du niveau de travail 11 s'étend selon un plan horizontal qui est suffisamment étendu pour permettre à l'opérateur se trouvant en station debout sur ledit plancher 12 d'accéder, sans quitter le niveau de travail 11, tour à tour à l'emplacement coeur 5, à l'emplacement de préparation 40, et aux premier et second modules de tête 3, 103 aussi bien lorsque lesdits premier et second modules de tête 3, 103 se trouvent en configuration de fermeture que lorsque lesdits premier et second modules de tête 3, 103 se trouvent en configuration d'ouverture.

En d'autres termes, il existe sur le plancher 12 du niveau de travail 11 au moins un chemin desservant, avec un changement d'altitude (dénivelé) cumulé sensiblement nul, typiquement inférieur à 50 cm, de préférence inférieur à 25 cm, et plus préférentiellement nul, l'ensemble des postes comprenant le premier poste coeur P1, le quatrième poste de préparation P4, et au moins les postes d'entretien P3, P3_103 des premier et second modules de tête 3, 103.

De préférence, ce même chemin dessert également les postes d'alimentation P2 de la première et de la seconde extrudeuse 4, 104, et plus préférentiellement l'ensemble des postes P2 d'alimentation de l'ensemble des extrudeuses 4, 4_2, 4_3, 104, 104_2, 104_3 de l'installation 1 qui viennent se raccorder au module d'outillage via l'un ou l'autre des premier et second modules de tête 3, 103.

Ainsi, de préférence, l'opérateur peut avantageusement accéder à tous les postes utiles à la conduite d'une production et aux changements de production, sans avoir à quitter le plancher 12, ni même à changer d'altitude lorsqu'il parcourt le chemin menant d'un poste à l'autre.

Selon une possibilité préférentielle de réalisation, le dispositif 30 de transfert par voie souterraine comprend un premier réceptacle 45 apte à recevoir un premier bloc d'outillage 6 et un second réceptacle 46 apte à recevoir un second bloc d'outillage 106, tel que cela est notamment visible sur les figures 6 à 13.

Ledit dispositif 30 de transfert par voie souterraine est alors agencé pour pouvoir présenter alternativement le premier réceptacle 45 et le second réceptacle 46 en vis-à-vis de la première cage d'ascenseur 31, tel que cela est visible sur les figures 9 et 10, de sorte à pouvoir exécuter une opération de substitution au cours de laquelle le dispositif 30 de transfert par voie souterraine recueille dans le premier réceptacle 45, via la première cage d'ascenseur 31, un premier bloc d'outillage 6 usagé en provenance de l'emplacement coeur 5 (figure 9), puis transfère, via ladite première cage d'ascenseur 31, un second bloc d'outillage 106 neuf depuis le second réceptacle 46 jusqu'à l'emplacement coeur 5, en remplacement du premier bloc d'outillage 6 (figure 11).

Par « neuf », on indique que le second module d'outillage 106 a été au préalable convenablement préparé, nettoyé et configuré, en l'espèce à l'emplacement de préparation 40, de sorte qu'il est prêt à être introduit à l'emplacement coeur 5 pour être utilisé afin de produire un profilé 2.

Avantageusement, l'utilisation de deux réceptacles 45, 46 aptes à venir se placer alternativement l'un puis l'autre au pied du premier mât élévateur 33, dans l'emprise verticale de la première cage d'ascenseur 31 (c'est-à-dire dans l'aire correspondant à la projection verticale du volume de la première cage d'ascenseur 31 dans un plan horizontal), permet d'opérer très rapidement la substitution entre le premier module d'outillage 6 usagé, suite à un premier cycle de production d'un premier profilé 2, et un second module d'outillage 106 neuf destiné au cycle de production suivant d'un autre profilé 2.

Tel que cela est visible sur les figures 4 à 15, les premier et second réceptacles 45, 46 sont transportés par le convoyeur 42, de préférence le long d'un rail de transfert 44 horizontal rectiligne, de sorte à pouvoir aller et venir, dans le sous-sol 32, de la première cage d'ascenseur 31, qui dessert ici l'emplacement coeur 5, à la seconde cage d'ascenseur 41, qui dessert ici l'emplacement de préparation 40, et réciproquement, de la seconde cage d'ascenseur 41 à la première cage d'ascenseur 31.

Les premier et second réceptacles 45, 46 pourront éventuellement former deux chariots indépendants l'un de l'autre, aptes à se déplacer chacun indépendamment de l'autre le long du rail de transfert 44. Toutefois, pour une plus grande simplicité du convoyeur 42 et de l'installation 1, les deux réceptacles 4, 46 pourront être réunis en un seul et même convoi porté par le rail de transfert 44.

Par ailleurs, pour assurer la fermeture et le serrage des premier et second modules de tête 3, 103 sur le module d'outillage 6, l'installation 1 comprendra de préférence, tel que cela est illustré sur les figures 14, 15 et 16, un premier mors 50 et un second mors 51, montés mobiles en translation selon la seconde direction horizontale Y perpendiculaire à la direction d'accouplement X.

Les branches de ces mors 50, 51 sont pourvues de rampes 52, qui viennent en prise contre des contre-rampes 53 prévues dans les modules de tête 3, 103, de sorte que le rapprochement mutuel du premier et du second mors 50, 51 selon la seconde direction horizontale Y force, par effet de coin, le rapprochement mutuel du premier module de tête 3 et du second module de tête 103 selon la direction d'accouplement X, de part et d'autre de l'emplacement coeur 5, et provoque ainsi le serrage du module d'outillage 6 entre lesdits modules de tête 3, 103, tel que cela est visible sur les figures 15 et 16.

Avantageusement, on remarquera que l'installation 1 présente ainsi, en définitive, une excellente compacité, et optimise l'espace qu'elle occupe, en ceci qu'elle exploite pour des fonctionnalités différentes les six directions de l'espace considérées autour de l'emplacement coeur 5, selon un trièdre orthogonal centré sur de l'emplacement coeur 5, à savoir, au niveau de travail 11 : l'extrusion du profilé par la face horizontale supérieure de l'emplacement coeur 5, l'amenée et le retrait du module d'outillage 6 par la face horizontale inférieure, l'application des modules de tête 3, 103 portant les extrudeuses par les face latérales normales à la direction d'accouplement X, les mouvements des mors 50, 51 en vis-à-vis des faces frontales normales à la seconde direction horizontale Y et, au sous-sol 32 : transfert du bloc d'outillage 6 vers et depuis l'emplacement de préparation 40 selon cette même seconde direction horizontale Y ; et ce tout en rendant tous les postes P1, P2, P3, P4 utiles accessibles directement à l'opérateur sur un même niveau de travail 11.

On notera que l'installation 1 peut éventuellement comprendre une plate-forme surélevée 60, située à une altitude supérieure à l'altitude du plancher 12, typiquement à une altitude comprise entre 1,40 m et 1,80 m au-dessus du plancher 12, plate-forme surélevée 60 à laquelle on accéder par un escalier et qui permettra d'accéder à la face supérieure du tapis d'évacuation 13, laquelle face supérieure du tapis d'évacuation 13 se trouvera à hauteur d'homme, et plus préférentiellement à une hauteur comprise entre 40 cm et 1,20 m, pour un opérateur se trouvant en station debout sur ladite plate-forme surélevée 60. Il s'agira ici de préférence du seul poste surélevé de l'installation 1.

Un procédé de substitution de module d'outillage 6, 106 selon l'invention va maintenant être succinctement décrit en lien avec les figures 6 à 13.

Au moins une partie, et de préférence la totalité, des étapes ci-dessous pourront avantageusement être gérées par une unité de commande appropriée, et de préférence accomplies de manière automatique.

Initialement (figure 6), un premier module d'outillage 6 se trouve en production, à l'emplacement coeur 5, tandis qu'un second module d'outillage 106, prêt à être envoyé en production, se trouve en attente à l'emplacement de préparation 40 où ledit second module d'outillage 106 a été préalablement nettoyé et/ou assemblé par un opérateur qui se trouvait pour ce faire au poste de préparation P4. L'installation 1 est en configuration de fermeture, comme illustré sur les figures 1, 2 et 3.

En fin de cycle de production, l'opérateur, qui se trouve en principe au poste coeur P1, interrompt la production et déclenche la substitution.

Les mors 50, 51 sont manoeuvrés en retrait pour déverrouiller les modules de têtes 3, 103, qui s'écartent de l'emplacement coeur 5 pour se placer en configuration d'ouverture et ainsi libérer le premier module d'outillage 6, comme illustré sur la figure 4.

Au niveau de la seconde cage d'ascenseur 41, le second mât élévateur 43 descend le second module de tête 106 à travers le plancher 12 (figure 7), depuis l'emplacement de préparation 40 jusqu'au second réceptacle 46 qui se trouvait placé en attente sur le convoyeur 42, à l'aplomb vertical de l'emplacement de préparation 40.

Le convoi des premier et second réceptacles 45, 46 se déplace alors en sous-sol 32, le long du convoyeur 42, pour quitter la seconde cage d'ascenseur 41 et gagner la première cage d'ascenseur 31, et positionner le premier réceptacle 45, vide, sous l'emplacement coeur 5, à l'aplomb vertical du premier mât élévateur 33 (figure 8). On notera que les opérations de descente du second module d'outillage 106 sur le convoyeur 42 et d'acheminement et de mise en attente des réceptacles 45, 46, et donc du second module d'outillage 106, vers la première cage d'ascenseur 31 pourront avantageusement être réalisées en temps masqué, pendant que se déroule le cycle de production mettant en oeuvre le premier module d'outillage 6.

Le premier module d'outillage 6, usagé, est alors extrait de l'emplacement coeur 5 par le premier mât élévateur 33 qui descend et escamote ledit premier module d'outillage 6 à travers le plancher 12, en passant par la première cage d'ascenseur 31, jusqu'à déposer ledit premier module d'outillage 6, usagé, en provenance du niveau de travail 11 dans le premier réceptacle 45 qui attend dans le sous-sol 32 (figure 9).

Le convoyeur 42 écarte alors le premier réceptacle 45 pour lui substituer, dans la première cage d'ascenseur 31, au pied du premier mât élévateur 33, le second réceptacle 46 contenant le second module d'outillage 106, neuf, à destination de l'emplacement coeur 5 (figure 10).

Le premier mât élévateur 33 fait alors monter le second module d'outillage 106 dans la première cage d'ascenseur 31, à travers le plancher 12 (figure 11), depuis le second réceptacle 46 situé en sous-sol 32, sous le plancher 12, jusqu'à ce que le second module d'outillage 106 atteigne l'emplacement coeur 5 situé au niveau de travail 11, au-dessus du plancher 12.

Le cas échéant, l'opérateur (de préférence le même opérateur, ou éventuellement un autre opérateur) gagne successivement, sans avoir à quitter le plancher 12 ni de ce fait à changer d'altitude, les postes P3, P3_103 d'entretien pour purger les extrudeuses 4, 4_2, 4_3, 104, 104_2, 104_3 et nettoyer les modules de tête 3, 103.

L'opérateur revient ensuite en principe au poste coeur P1, afin de déclencher et surveiller la fermeture des modules de tête 3, 103 sur le second module d'outillage 106. Il enclenche alors le nouveau cycle de production, le cas échéant après s'être rendu aux postes d'alimentation P2 pour vérifier et/ou reconfigurer l'alimentation en matériau à extruder des différentes extrudeuses.

Pendant ce temps, ou après que l'opérateur a enclenché ce nouveau cycle de production, le convoyeur 42 renvoie les réceptacles 45, 46 à travers le sous-sol 32 à destination de la seconde cage d'ascenseur 41, et positionne le premier réceptacle 45, contenant le premier module d'outillage 6 usagé en provenance de l'emplacement coeur 5, en vis-à-vis du second mât élévateur 43, sous l'emplacement de préparation 40 (figure 12).

Le second mât élévateur 43 fait alors remonter le premier module d'outillage 6 à travers le plancher 12 (figures 12 et 13), depuis le premier réceptacle 45, jusqu'à ce que ledit premier module d'outillage 6 atteigne l'emplacement de préparation 40, où un opérateur (de préférence le même opérateur, qui s'est rendu à cet effet au poste de préparation P4 sans avoir eu à quitter le plancher 12), peut procéder à son nettoyage, éventuellement à sa reconfiguration, voire à son remplacement pur et simple par un troisième module d'outillage, tandis que le second module d'outillage 106 est en production.

Il est envisageable que l'opérateur commande tout ou partie des commandes de fermeture et d'ouverture des modules de tête 3, 103 depuis un poste autre que le poste coeur P1.

## Revendications

1. Installation (1) d'extrusion destinée à réaliser un profilé (2), ladite installation comprenant au moins un premier module de tête (3) qui porte au moins une première extrudeuse (4) destinée à délivrer un matériau constitutif du profilé, ladite installation comprenant également un emplacement (5), dit « emplacement coeur » (5), qui est conçu pour recevoir un module d'outillage (6) afin de permettre la connexion de ladite au moins une première extrudeuse (4) audit module d'outillage (6) en vue de conformer le profilé (2), ladite installation étant **caractérisée en ce que** l'emplacement coeur (5) est situé à un premier niveau (11), dit « niveau de travail » (11), qui est pourvu d'un plancher (12) sur lequel un opérateur peut circuler pour accéder audit emplacement coeur (5) qui se trouve au-dessus dudit plancher (12), et **en ce que** ladite installation (1) comprend un dispositif (30) de transfert par voie souterraine qui permet d'acheminer le module d'outillage (6) jusqu'à l'emplacement coeur (5) et/ou, respectivement, de dégager le module d'outillage (6) hors dudit emplacement coeur (5), ledit dispositif de transfert par voie souterraine comprenant à cet effet au moins une première cage d'ascenseur (31) qui est conçue pour faire passer ledit module d'outillage (6) à travers le plancher (12), depuis, ou respectivement vers, un second niveau (32), dit « sous-sol » (32), qui est situé sous le plancher (12) du niveau de travail (11).

2. Installation selon la revendication 1 **caractérisée en ce qu'**elle comprend un dispositif d'accouplement (20) qui permet de déplacer le premier module de tête (3) sur le plancher (12) du niveau de travail (11), de sorte à faire alternativement passer le premier module de tête (3) entre d'une part une configuration de fermeture, dans laquelle ledit premier module de tête (3) est rapproché de l'emplacement coeur (5) de sorte à être pressé au contact du module d'outillage (6) et à mettre ainsi en communication la première extrudeuse (4) avec ledit module d'outillage (6), et d'autre part une configuration d'ouverture, dans laquelle le premier module de tête (3) est éloigné de l'emplacement coeur (5) et donc du module d'outillage (6), tout en étant accessible à un opérateur qui se trouve sur le plancher (12), au niveau de travail (11).

3. Installation selon l'une des revendications 1 ou 2 **caractérisée en ce que** l'emplacement coeur (5) se situe à l'intérieur d'une plage d'altitude comprise entre 0 cm et 200 cm, de préférence entre 30 cm et 180 cm, par rapport au plancher (12) du niveau de travail (11).

4. Installation selon l'une des revendications précédentes **caractérisée en ce qu'**elle comporte un emplacement de préparation (40), qui est distinct et distant de l'emplacement coeur (5), et qui est prévu pour permettre une préparation, en particulier un nettoyage, du module d'outillage (6) en-dehors de l'emplacement coeur (5), et **en ce que** le dispositif (30) de transfert par voie souterraine est agencé de sorte à pouvoir acheminer le module d'outillage (6), en passant à travers le plancher (12) par la première cage d'ascenseur (31), de l'emplacement de préparation (40) jusqu'à l'emplacement coeur (5), et réciproquement, de l'emplacement coeur (5) jusqu'à l'emplacement de préparation (40).

5. Installation selon la revendication 4 **caractérisée en ce que** l'emplacement de préparation (40) se trouve au niveau de travail (11), au-dessus du plancher (12), de sorte à être accessible à l'opérateur circulant sur le plancher (12), et **en ce que** le dispositif (30) de transfert par voie souterraine comprend une seconde cage d'ascenseur (41) qui est située à distance de la première cage d'ascenseur (31), qui est reliée à la première cage d'ascenseur (31) par un convoyeur (42) situé dans le sous-sol (32), et qui est conçue pour faire passer le module d'outillage (6) à travers le plancher (12), depuis l'emplacement de préparation (40) situé au niveau de travail (11), au-dessus du plancher (12), jusqu'au convoyeur (42) situé en sous-sol (32), sous le plancher (12), et, réciproquement, pour faire passer le module d'outillage (6) du convoyeur (42) situé en sous-sol (32), sous le plancher (12), jusqu'à l'emplacement de préparation (40) situé au-dessus du plancher (12).

6. Installation selon l'une des revendications précédentes **caractérisée en ce que** le dispositif (30) de transfert par voie souterraine comprend un premier réceptacle (45) apte à recevoir un premier bloc d'outillage (6) et un second réceptacle (46) apte à recevoir un second bloc d'outillage (106) et **en ce que** ledit dispositif (30) de transfert par voie souterraine est agencé pour pouvoir présenter alternativement le premier réceptacle (45) et le second réceptacle (46) en vis-à-vis de la première cage d'ascenseur (31), de sorte à pouvoir exécuter une opération de substitution au cours de laquelle le dispositif (30) de transfert par voie souterraine recueille dans le premier réceptacle (45), via la première cage d'ascenseur (31), un premier bloc d'outillage (6) usagé en provenance de l'emplacement coeur (5), puis transfère, via ladite première cage d'ascenseur (31), un second bloc d'outillage (106) neuf depuis le second réceptacle (46) jusqu'à l'emplacement coeur (5), en remplacement du premier bloc d'outillage (6).

7. Installation selon les revendications 5 et 6 **caractérisée en ce que** les premier et second réceptacles (45, 46) sont transportés par le convoyeur (42), de préférence le long d'un rail de transfert (44) horizontal rectiligne, de sorte à pouvoir aller et venir, dans le sous-sol (32), de la première cage d'ascenseur (31) à la seconde cage d'ascenseur (41) et réciproquement.

8. Installation selon l'une des revendications précédentes, **caractérisée en ce qu'**elle comprend un rouleau (7) qui est monté mobile en rotation au-dessus de l'emplacement coeur (5), à la verticale de la première cage d'ascenseur (31), de sorte que lorsque le module d'outillage (6) se trouve à l'emplacement coeur (5), il coopère avec le rouleau (7) pour former un entrefer (8) permettant de conformer le profilé (2).

9. Installation selon les revendications 5 et 8 **caractérisée en ce qu'**elle comprend, au niveau de travail (11), un second module de tête (103) portant au moins une seconde extrudeuse (104, 104_2, 104_3), **en ce que** le premier et le second module de tête sont montés mobiles sur le plancher selon une première direction horizontale (X), dite direction d'accouplement (X), en opposition l'un de l'autre, de part et d'autre de l'emplacement coeur (5), de sorte à pouvoir adopter alternativement d'une part une configuration d'ouverture, dans laquelle lesdits premier et second modules de tête (3, 103) sont chacun éloignés de l'emplacement coeur (5) selon la direction d'accouplement (X), de sorte à permettre au dispositif (30) de transfert par voie souterraine d'engager le module d'outillage (6) dans l'emplacement coeur (5) et/ou de retirer le module d'outillage (6) dudit emplacement coeur (5), et d'autre part une configuration de fermeture, dans laquelle lesdits premier et second modules de tête (3, 103) sont rapprochés l'un de l'autre selon la direction d'accouplement (X), de sorte à être plaqués en compression contre le module d'outillage (6) se trouvant à l'emplacement coeur (5), de part et d'autre dudit module d'outillage (6) selon la direction d'accouplement (X), pour mettre la première extrudeuse (4) et la seconde extrudeuse (104) en communication avec le module d'outillage (6), **en ce que** la première cage d'ascenseur (31) est située sous l'emplacement coeur (5), à la verticale de l'emplacement coeur (5) et du rouleau (7), **en ce que** la seconde cage d'ascenseur (41) se trouve sous l'emplacement de préparation (40) à la verticale dudit emplacement de préparation (41), **en ce que** ledit emplacement de préparation (40) et la seconde cage d'ascenseur (41) correspondante sont décalés par rapport à l'emplacement coeur (5) et à la première cage d'ascenseur (31) selon une seconde direction horizontale (Y) qui est transverse, et de préférence perpendiculaire, à la direction d'accouplement (X), et selon laquelle est orienté le convoyeur (42) placé en sous-sol (32), et **en ce que** le plancher (12) s'étend selon un plan horizontal suffisamment étendu pour permettre à l'opérateur se trouvant en station debout sur ledit plancher (12) d'accéder, sans quitter le niveau de travail (11), tour à tour à l'emplacement coeur (5), à l'emplacement de préparation (40), et aux premier et second modules de tête (3, 103) aussi bien lorsque lesdits premier et second modules de tête (3, 103) se trouvent en configuration de fermeture que lorsque lesdits premier et second modules de tête se trouvent en configuration d'ouverture (3, 103).

10. Installation selon la revendication 9 **caractérisée en ce que** le module d'outillage (6) comprend un ensemble de plaques parallèles empilées les unes contre les autres dans le sens de leur épaisseur selon la direction d'accouplement (X).

11. Installation selon l'une des revendications précédentes **caractérisée en ce que** la hauteur libre du niveau de travail (11) au-dessus du plancher (12) est égale ou supérieure à 2,00 m, de préférence à 2,50 m, voire à 3,00 m, et **en ce que** la hauteur libre en sous-sol (H32) est égale ou supérieure à 1,90 m, préférentiellement comprise entre 2,00 m et 2,50 m.

## Patentansprüche

1. Extrusionsanlage (1), die dazu bestimmt ist, ein Profil (2) herzustellen, wobei die Anlage mindestens ein erstes Kopfmodul (3) umfasst, das mindestens einen ersten Extruder (4) trägt, der dazu bestimmt ist, ein Material, aus dem das Profil besteht, auszugeben, wobei die Anlage auch einen Platz (5), "Kernplatz" (5) genannt, umfasst, der dazu ausgestaltet ist, ein Werkzeugmodul (6) aufzunehmen, um das Verbinden des mindestens einen ersten Extruders (4) mit dem Werkzeugmodul (6) im Hinblick auf das Formen des Profils (2) zu ermöglichen, wobei die Anlage **dadurch gekennzeichnet ist, dass** der Kernplatz (5) auf einer ersten Ebene (11), "Arbeitsebene" (11) genannt, gelegen ist, die mit einem Boden (12) versehen ist, auf dem eine Bedienperson gehen kann, um auf den Kernplatz (5) zuzugreifen, der sich über dem Boden (12) befindet, und dass die Anlage (1) eine Unterflur-Transfervorrichtung (30) umfasst, die es ermöglicht, das Werkzeugmodul (6) bis zu dem Kernplatz (5) zu führen und/oder beziehungsweise das Werkzeugmodul (6) aus dem Kernplatz (5) herauszuführen, wobei die Unterflur-Transfervorrichtung zu diesem Zweck mindestens einen ersten Aufzugsschacht (31) umfasst, der dazu ausgestaltet ist, das Werkzeugmodul (6) durch den Boden (12) hindurch von bzw. zu einer zweiten Ebene (32), "Untergeschoss" (32) genannt, übergehen zu lassen, die unter dem Boden (12) der Arbeitsebene (11) gelegen ist.

2. Anlage nach Anspruch 1, **dadurch gekennzeichnet, dass** sie eine Kupplungsvorrichtung (20) umfasst, die es ermöglicht, das erste Kopfmodul (3) auf dem Boden (12) der Arbeitsebene (11) zu bewegen, so dass sie das erste Kopfmodul (3) abwechselnd zwischen zum einen einer Schließkonfiguration, in der das erste Kopfmodul (3) an den Kernplatz (5) herangeführt ist, so dass es an das Werkzeugmodul (6) angepresst wird und somit der erste Extruder (4) mit dem Werkzeugmodul (6) in Verbindung gebracht wird, und zum anderen einer Öffnungskonfiguration, in der das erste Kopfmodul (3) von dem Kernplatz (5) und demzufolge von dem Werkzeugmodul (6) entfernt ist, übergehen lässt, wobei sie dabei für eine Bedienperson zugänglich ist, die sich auf dem Boden (12), auf der Arbeitsebene (11), befindet.

3. Anlage nach einem der Ansprüche 1 oder 2, **dadurch gekennzeichnet, dass** der Kernplatz (5) innerhalb eines Höhenbereichs zwischen 0 cm und 200 cm, bevorzugt zwischen 30 cm und 180 cm, bezogen auf den Boden (12) der Arbeitsebene (11) gelegen ist.

4. Anlage nach einem der vorhergehenden Ansprüche, **dadurch gekennzeichnet, dass** sie einen Vorbereitungsplatz (40) umfasst, der von dem Kernplatz (5) verschieden und beabstandet ist und der dazu vorgesehen ist, eine Vorbereitung, insbesondere eine Reinigung, des Werkzeugmoduls (6) außerhalb des Kernplatzes (5) zu ermöglichen, und dass die Unterflur-Transfervorrichtung (30) so eingerichtet ist, dass sie das Werkzeugmodul (6) durch den Boden (12) hindurch durch den ersten Aufzugsschacht (31) von dem Vorbereitungsplatz (40) bis zu dem Kernplatz (5) und umgekehrt von dem Kernplatz (5) bis zu dem Vorbereitungsplatz (40) führen kann.

5. Anlage nach Anspruch 4, **dadurch gekennzeichnet, dass** sich der Vorbereitungsplatz (40) auf der Arbeitsebene (11), über dem Boden (12), befindet, so dass er für die auf dem Boden (12) gehende Bedienperson zugänglich ist, und dass die Unterflur-Transfervorrichtung (30) einen zweiten Aufzugsschacht (41) umfasst, der im Abstand von dem ersten Aufzugsschacht (31) gelegen ist, der mit dem ersten Aufzugsschacht (31) durch einen Förderer (42) verbunden ist, der in dem Untergeschoss (32) gelegen ist, und der dazu ausgestaltet ist, das Werkzeugmodul (6) durch den Boden (12) hindurch von dem Vorbereitungsplatz (40), der auf der Arbeitsebene (11), über dem Boden (12), gelegen ist, bis zu dem Förderer (42), der im Untergeschoss (32), unter dem Boden (12), gelegen ist, und umgekehrt übergehen zu lassen, um das Werkzeugmodul (6) von dem Förderer (42), der im Untergeschoss (32), unter dem Boden (12), gelegen ist, bis zu dem Vorbereitungsplatz (40), der über dem Boden (12) gelegen ist, übergehen zu lassen.

6. Anlage nach einem der vorhergehenden Ansprüche, **dadurch gekennzeichnet, dass** die Unterflur-Transfervorrichtung (30) ein erstes Behältnis (45), das zum Aufnehmen eines ersten Werkzeugblocks (6) geeignet ist, und ein zweites Behältnis (46), das zum Aufnehmen eines zweiten Werkzeugblocks (106) geeignet ist, umfasst, und dass die Unterflur-Transfervorrichtung (30) dazu eingerichtet ist, abwechselnd das erste Behältnis (45) und das zweite Behältnis (46) gegenüber dem ersten Aufzugsschacht (31) zu präsentieren, so dass ein Austauschvorgang ausgeführt werden kann, in dessen Verlauf die Unterflur-Transfervorrichtung (30) in das erste Behältnis (45), über den ersten Aufzugsschacht (31), einen von dem Kernplatz (5) kommenden ersten gebrauchten Werkzeugblock (6) aufnimmt, dann, über den ersten Aufzugsschacht (31), einen zweiten neuen Werkzeugblock (106) von dem zweiten Behältnis (46) aus bis zu dem Kernplatz (5), als Ersatz für den ersten Werkzeugblock (6), transferiert.

7. Anlage nach den Ansprüchen 5 und 6, **dadurch gekennzeichnet, dass** die ersten und zweiten Behältnisse (45, 46) von dem Förderer (42) befördert werden, bevorzugt entlang einer horizontalen geradlinigen Transferschiene (44), so dass sie sich in dem Untergeschoss (32) zwischen dem ersten Aufzugsschacht (31) und dem zweiten Aufzugsschacht (41) hin und her bewegen können.

8. Anlage nach einem der vorhergehenden Ansprüche, **dadurch gekennzeichnet, dass** sie eine Rolle (7) umfasst, die drehbeweglich über dem Kernplatz (5), in der Vertikalen des ersten Aufzugsschachts (31), montiert ist, so dass das Werkzeugmodul (6), wenn es sich an dem Kernplatz (5) befindet, mit der Rolle (7) zusammenwirkt, um einen Spalt (8) zu bilden, der es ermöglicht, das Profil (2) zu formen.

9. Anlage nach den Ansprüchen 5 und 8, **dadurch gekennzeichnet, dass** sie, auf der Arbeitsebene (11), ein zweites Kopfmodul (103) umfasst, das mindestens einen zweiten Extruder (104, 104_2, 104_3) trägt, dass das erste und das zweite Kopfmodul auf dem Boden entlang einer horizontalen ersten Richtung (X), Kupplungsrichtung (X) genannt, gegenläufig zueinander beidseits des Kernplatzes (5) beweglich montiert sind, so dass sie abwechselnd zum einen eine Öffnungskonfiguration einnehmen können, in der die ersten und zweiten Kopfmodule (3, 103) jeweils von dem Kernplatz (5) entlang der Kupplungsrichtung (X) entfernt sind, so dass es der Unterflur-Transfervorrichtung (30) ermöglicht wird, das Werkzeugmodul (6) in den Kernplatz (5) einzusetzen und/oder das Werkzeugmodul (6) aus dem Kernplatz (5) zu entnehmen, und zum anderen eine Schließkonfiguration einnehmen können, in der die ersten und zweiten Kopfmodule (3, 103) entlang der Kupplungsrichtung (X) aneinander herangeführt sind, so dass sie gegen das Werkzeugmodul (6), das sich an dem Kernplatz (5) befindet, beidseits des Werkzeugmoduls (6) entlang der Kupplungsrichtung (X) gepresst werden, um den ersten Extruder (4) und den zweiten Extruder (104) in Verbindung mit dem Werkzeugmodul (6) zu bringen, dass der erste Aufzugsschacht (31) unter dem Kernplatz (5), in der Vertikalen des Kernplatzes (5) und der Rolle (7), gelegen ist, dass sich der zweite Aufzugsschacht (41) unter dem Vorbereitungsplatz (40) in der Vertikalen des Vorbereitungsplatzes (41) befindet, dass der Vorbereitungsplatz (40) und der entsprechende zweite Aufzugsschacht (41) in Bezug auf den Kernplatz (5) und den ersten Aufzugsschacht (31) entlang einer horizontalen zweiten Richtung (Y) versetzt sind, die quer, und bevorzugt senkrecht, zu der Kupplungsrichtung (X) verläuft und entlang welcher der im Untergeschoss (32) platzierte Förderer (42) ausgerichtet ist, und dass sich der Boden (12) entlang einer horizontalen Ebene erstreckt, die ausreichend groß ist, um es der Bedienperson, die sich in stehender Haltung auf dem Boden (12) befindet, zu ermöglichen, ohne die Arbeitsebene (11) zu verlassen, nacheinander auf den Kernplatz (5), auf den Vorbereitungsplatz (40) und auf die ersten und zweiten Kopfmodule (3, 103) zuzugreifen, sowohl, wenn sich die ersten und zweiten Kopfmodule (3, 103) in der Schließkonfiguration befinden, als auch, wenn sich die ersten und zweiten Kopfmodule in der Öffnungskonfiguration (3, 103) befinden.

10. Anlage nach Anspruch 9, **dadurch gekennzeichnet, dass** das Werkzeugmodul (6) eine Anordnung von parallelen Platten umfasst, die in Richtung ihrer Dicke entlang der Kupplungsrichtung (X) gegeneinander gestapelt sind.

11. Anlage nach einem der vorhergehenden Ansprüche, **dadurch gekennzeichnet, dass** die lichte Höhe der Arbeitsebene (11) über dem Boden (12) gleich oder größer als 2,00 m, bevorzugt als 2,50 m oder sogar als 3,00 m ist und dass die lichte Höhe im Untergeschoss (H32) gleich oder größer als 1,90 m ist, bevorzugt zwischen 2,00 m und 2,50 m beträgt.

## Claims

1. Extrusion facility (1) intended to produce a profiled element (2), the said facility comprising at least one first head module (3) which bears at least one first extruder (4) intended to supply a constituent material of the profiled element, the said facility also comprising a site (5), referred to as "core site" (5), which is designed to receive a tool module (6) in order to enable the connection of the said at least one first extruder (4) to the said tool module (6) in order to shape the profiled element (2), the said facility being **characterized in that** the core site (5) is located at a first level (11), referred to as "working level" (11), which is provided with a floor (12) on which an operator can move about to access the said core site (5) which is located above the said floor (12), and **in that** the said facility (1) comprises an underground-transfer device (30) which makes it possible to convey the tool module (6) to the core site (5) and/or, respectively, to remove the tool module (6) from the said core site (5), the said underground-transfer device to that end comprising at least one first lift cage (31) which is designed to move the said tool module (6) through the floor (12) from, or respectively to, a second level (32), referred to as "basement" (32), which is located below the floor (12) of the working level (11).

2. Facility according to Claim 1, **characterized in that** it comprises a coupling device (20) which makes it possible to displace the first head module (3) on the floor (12) of the working level (11), so as to alternately change the first head module (3) between for the one part a closed configuration, in which the said first head module (3) is moved close to the core site (5) so as to be pressed into contact with the tool module (6) and to thus place the first extruder (4) in communication with the said tool module (6), and for the other part an open configuration, in which the first head module (3) is moved away from the core site (5) and thus from the tool module (6) whilst remaining accessible to an operator who is on the floor (12), at the working level (11).

3. Facility according to either of Claims 1 and 2, **characterized in that** the core site (5) is located within an elevation range of between 0 cm and 200 cm, preferably between 30 cm and 180 cm, above the floor (12) of the working level (11).

4. Facility according to one of the preceding claims, **characterized in that** it has a preparation site (40), which is separate and remote from the core site (5) and is provided to enable preparation, in particular cleaning, of the tool module (6) outside the core site (5), and **in that** the underground-transfer device (30) is arranged so as to be able to convey the tool module (6), by moving through the floor (12) via the first lift cage (31), from the preparation site (40) to the core site (5), and vice versa, from the core site (5) to the preparation site (40).

5. Facility according to Claim 4, **characterized in that** the preparation site (40) is located at the working level (11), above the floor (12), so as to be accessible to an operator moving about on the floor (12), and **in that** the underground-transfer device (30) comprises a second lift cage (41) which is located at a distance from the first lift cage (31), is connected to the first lift cage (31) by a conveyor (42) located in the basement (32), and is designed to move the tool module (6) through the floor (12), from the preparation site (40) located at the working level (11), above the floor (12), to the conveyor (42) located in the basement (32), below the floor (12), and vice versa, to move the tool module (6) from the conveyor (42) located in the basement (32), below the floor (12), to the preparation site (40) located above the floor (12).

6. Facility according to one of the preceding claims, **characterized in that** the underground-transfer device (30) comprises a first receptacle (45) able to receive a first tool block (6) and a second receptacle (46) able to receive a second tool block (106), and **in that** the said underground-transfer device (30) is designed to be able to put alternately the first receptacle (45) and the second receptacle (46) facing the first lift cage (31), so as to be able to carry out a replacement operation during which the underground-transfer device (30) accommodates in the first receptacle (45), via the first lift cage (31), a used first tool block (6) coming from the core site (5), and then transfers, via the said first lift cage (31), a new second tool block (106) from the second receptacle (46) to the core site (5), as a replacement for the first tool block (6).

7. Facility according to Claims 5 and 6, **characterized in that** the first and second receptacles (45, 46) are transported by the conveyor (42), preferably along a rectilinear horizontal transfer rail (44), so as to be able to come and go, in the basement (32), from the first lift cage (31) to the second lift cage (41), and vice versa.

8. Facility according to one of the preceding claims, **characterized in that** it comprises a roller (7) which is mounted so as to be able to rotate above the core site (5), vertically in line with the first lift cage (31), such that when the tool module (6) is located at the core site (5), it interacts with the roller (7) to form a gap (8) for shaping the profiled element (2).

9. Facility according to Claims 5 and 8, **characterized in that** it comprises, at the working level (11), a second head module (103) bearing at least one second extruder (104, 104_2, 104_3), **in that** the first and the second head module are mounted so as to be able to move on the floor along a first horizontal direction (X), referred to as coupling direction (X), oppositely to one another, on either side of the core site (5) so as to be able to alternately adopt for the one part an open configuration, in which the said first and second head modules (3, 103) are each moved away from the core site (5) along the coupling direction (X), so as to allow the underground-transfer device (30) to engage the tool module (6) in the core site (5) and/or to remove the tool module (6) from the said core site (5), and for the other part a closed configuration, in which the said first and second head modules (3, 103) are moved close to one another along the coupling direction (X), so as to be held pressed against the tool module (6) located at the core site (5), on either side of the said tool module (6) along the coupling direction (X), to place the first extruder (4) and the second extruder (104) in communication with the tool module (6), **in that** the first lift cage (31) is located below the core site (5), vertically in line with the core site (5) and the roller (7), **in that** the second lift cage (41) is located below the preparation site (40) vertically in line with the said preparation site (41), **in that** the said preparation site (40) and the corresponding second lift cage (41) are offset in relation to the core site (5) and to the first lift cage (31) along a second horizontal direction (Y) which is transverse, and preferably perpendicular, to the coupling direction (X), and along which is oriented the conveyor (42) positioned in the basement (32), and **in that** the floor (12) extends along a horizontal plane which is large enough to allow the operator standing on the said floor (12) to access by turns, without leaving the working level (11), the core site (5), the preparation site (40), and the first and second head modules (3, 103) both when the said first and second head modules (3, 103) are in the closed configuration and when the said first and second head modules (3, 103) are in the open configuration.

10. Facility according to Claim 9, **characterized in that** the tool module (6) comprises an assembly of parallel plates stacked against one another in the direction of their thickness along the coupling direction (X).

11. Facility according to one of the preceding claims, **characterized in that** the free height of the working level (11) above the floor (12) is equal to or greater than 2.00 m, preferably 2.50 m, or even 3.00 m, and **in that** the free height (H32) in the basement is equal to or greater than 1.90 m, preferably lies between 2.00 m and 2.50 m.
